# EUROPEAN PATENT APPLICATION

(11) **EP 0 777 206 A1**
(43) Date of publication of application: **04.06.1997**
(21) Application number: 96117348.1
(22) Date of filing: 29.10.1996
(51) Int. Cl.: G08G 1/0969

(54) **Vehicular navigation apparatus**

(30) Priority: 30.11.1995 JP 338305/95; 30.11.1995 JP 338303/95; 30.11.1995 JP 338304/95
(71) Applicant: AISIN AW CO., LTD., Anjo-shi Aichi-ken (JP)
(72) Inventor: Hayashida, Kihachi, Anjo-shi, Aichi-ken, 446 (JP); Yanagikubo, Takeshi, Nishio-shi, Aichi-ken, 445 (JP)
(74) Representative: VOSSIUS & PARTNER

(57) **Abstract**

A vehicular navigation apparatus for route guidance to a destination, has: a storage unit that stores information needed for navigation and map information; a unit for detecting the current position and traveling direction of the vehicle; a search unit for finding a guiding route from the current position to the destination based on the stored information, and for, when the vehicle has deviated from the route, re-finding a guiding route; a storage unit for storing the found route and the route re-found when the vehicle has deviated from the route; an off-route detector unit for detecting a deviation of the vehicle from the guiding route on the basis of the detected current position and the stored guiding route information. Upon an instruction given, when the vehicle has deviated from the guiding route, to start route guidance based on a re-found route, the apparatus outputs the stored re-found route to perform route guidance based on the re-found route. Furthermore, when an off-route deviation is detected, the apparatus determines a map scale that enables the display of a re-found route, and performs the display processing on the determined map scale and outputs guidance information based on the guiding route.

## Description

The present invention relates to a vehicular navigation apparatus for route guidance to a destination along a route found by search and, more particularly, to a vehicular navigation apparatus that performs route re-finding whenever an off-route deviation occurs, and stores the re-found route, and performs necessary display processing of the re-found route immediately upon a re-find request from a driver.

The present invention also relates to a vehicular navigation apparatus for route guidance to a destination and, more particularly, to a vehicular navigation apparatus that functions to perform route re-finding whenever an off-route deviation occurs, and store the re-found route, and perform necessary display processing of the re-found route immediately upon a re-find request from a user, and that when the vehicle goes off a route, functions to switch to such a map scale that it is possible to display the road information needed to return to the route.

There is proposed a vehicular navigation apparatus that has a function to, during guidance to a destination along a route found by search, detect an off-route deviation when the vehicle has deviated from the guiding route, and perform route re-finding. The route re-finding is performed in different manners, that is, a manner (manual reroute function) in which upon detection of an off-route deviation, the apparatus notifies the off-route deviation in a map display screen, and displays a re-find switch to recommend starting route re-finding, and starts route re-finding when a user presses the re-find switch, and a manner (auto-reroute function) in which upon detection of an off-route deviation, the apparatus automatically starts route re-finding. The auto-reroute function is set beforehand to the use (auto-reroute-on mode) or the non-use (auto-reroute-off mode).

In the conventional auto-reroute-on mode, upon detecting a deviation of a vehicle from a preset route, the apparatus automatically finds a route connecting to the previous route (the preset route) (that is, the surrounding route finding), or a new route from the current vehicle position at the time of the detection of off-route deviation to the destination, thus presenting to the driver a route from the current position to the destination. In the off mode of the auto-reroute function, the apparatus is inhibited from automatically performing route re-finding upon detection of an off-route deviation and, instead, notifies the off-route deviation to the driver and performs the route re-find operation upon the driver's instruction through the re-find switch.

However, the conventional auto-reroute function has problems. Particularly in the auto-reroute-off mode, the apparatus is not able to provide a timely re-finding result when a driver desires the execution of route re-finding. That is, there is a time lag between the instruction to execute route re-finding and the output of the route re-finding result onto the display screen. Particularly, when the apparatus searches for a route from the position at which the driver requests route re-finding to the destination after the vehicle has deviated from the preset route, that is, performs the entire route finding, the search time becomes long, further increasing the time lag.

Furthermore, a conventional system that performs manual route re-finding displays a key to start route re-finding when the vehicle deviates from an optimal route, so that a user operates the key to start re-finding when desires so. As for another system that automatically performs route re-finding based on the current vehicle position after the vehicle has deviated from an optimal route automatically, the system performs the surrounding route finding when determining that the vehicle has deviated from an optimal route, in order to find a route connecting to the previous route. In addition, the system is able to find an entire route to the destination instead. The aforementioned system with the manual route re-finding may cause problems if a user intentionally goes off the current route to do some shopping or the like, or to avoid a traffic congestion caused by road construction or the like ahead on the route, or to take a detour around a closed road. In such occasions, users often returns to the previous route after driving off the route in relatively limited areas without instructing to perform route re-finding. If the map displayed in such occasions is a detailed map, users will find it difficult to see the positional relation between the current position and the previous route or gather information necessary to return to the previous route, and will have to change the map scale or do other troublesome operations. The system with the automatic surrounding route finding has similar problems in that detailed maps make it difficult for users to understand or envision the new route connecting to the previous route.

It is an object of the present invention to provide a vehicular navigation apparatus that executes route re-finding as an internal processing upon detection of an off-route deviation, regardless of a selected mode of the auto-reroute function, and stores the re-found route and, upon a driver's request for route re-finding, quickly displays the stored re-found route and performs route guidance immediately.

To achieve the aforementioned object, according to a first aspect of the present invention, there is provided a vehicular navigation apparatus for route guidance to a destination based on a route found by search, comprising: storage means in which information needed for navigation and map information are stored; current position detecting means for detecting a current position of a vehicle and a traveling direction of the vehicle; route finding means for finding a guiding route from a current position to a destination based on the information stored in the storage means, and for, when the vehicle has deviated from the route, re-finding a guiding route; route storing means for storing the route found by the route finding means and the route re-found by the route finding means when the vehicle has deviated from the route; off-route deviation detecting means for detecting a deviation of the vehicle from the guiding route on the basis of detection by the current position detecting means and guiding route information stored in the route storing means; outputting means for outputting guidance information based on the guiding route; central processing means for outputting guidance information to the outputting means on the basis of the guiding route found by the route finding means and the current position detected by the current position detecting means; and route output instructing means for instructing to output the re-found route stored in the route storing means. Upon an instruction given, when the vehicle has deviated from the guiding route, by the route output instructing means to start route guidance based on a re-found route, the central processing means outputs the re-found route stored in the route storing means in order to perform route guidance based on the re-found route.

With this construction, upon detection of an off-route deviation, the route finding means starts route re-finding, and stores the re-found route in the route storing means. When a driver instructs by the route output instructing means to perform route guidance based on a re-found route, the central processing means outputs to the outputting means the guidance information based on the re-found route stored in the route storing means, and performs guidance to the destination. By thus executing route re-finding as an internal operation, the apparatus is able to output a necessary route immediately upon a driver's request for route re-finding even during the auto-reroute-off mode, thus preventing the problem of time lag that occurs in the conventional art, at least in the matter of appearance.

Preferably, the route output instructing means comprises means for selecting an auto-reroute-on mode for immediately starting route guidance based on the result of route re-finding, and an auto-reroute-off mode for storing the result of route re-finding and, upon a driver's instruction to output a re-found route, displaying the stored result of route re-finding and starting route guidance.

With this preferred construction, since the apparatus enables selection of automatic or manual output of the result of the route re-find operation executed upon detection of an of-route deviation, the apparatus is able to perform route guidance as desired by a user.

It is an object of the present invention to provide a vehicular navigation apparatus that has a function to selectively switch to such a display scale that road information necessary to return to the previous road can easily be obtained when the vehicle has deviated from the route.

To achieve this object, according to a second aspect of the present invention, there is provided a vehicular navigation apparatus for route guidance to a destination based on a route found by search, comprising: storage means in which information needed for navigation and map information are stored; current position detecting means for detecting a current position of a vehicle and a traveling direction of the vehicle; route finding means for finding a guiding route from a current position to a destination based on the information stored in the storage means, and for, when the vehicle has deviated from the route, re-finding a guiding route; route storing means for storing the route found by the route finding means and the route re-found by the route finding means when the vehicle has deviated from the route; off-route deviation detecting means for detecting a deviation of the vehicle from the guiding route on the basis of detection by the current position detecting means and guiding route information stored in the route storing means; map scale determining means for, when the route deviation detecting means detects an off-route deviation, determining a map scale such that it becomes possible to display in a map a route re-found on the basis of current position information detected by the current position detecting means; route display processing means for performing display processing of the guiding route found by the route finding means and display processing of the route re-found by the route finding means when an off-route deviation is detected, on the basis of the map scale determined by the map scale determining means; and outputting means for outputting guidance information based on the guiding route processed by the route display processing means.

With this construction, the apparatus stores in the route storing means a route found by route search executed when an off-route deviation is detected, and automatically switches to a map display based on the map scale determined by the map scale determining means to enable the re-found route to be displayed. Thereby, when the vehicle has deviated from a route, the apparatus automatically displays a map based on the scale that allows inclusion of the previous route in the map, making it easy for a user to quickly obtain information about the travel from the point of deviation from the previous route to the point of re-entering the route.

According to a third aspect of the invention, there is provided a vehicular navigation apparatus for route guidance to a destination based on a route found by search, comprising: storage means in which information needed for navigation and map information are stored; current position detecting means for detecting a current position of a vehicle and a traveling direction of the vehicle; route finding means for finding a guiding route from a current position to a destination based on the information stored in the storage means, and for, when the vehicle has deviated from the route, re-finding a guiding route; route storing means for storing the route found by the route finding means and the route re-found by the route finding means when the vehicle has deviated from the route; off-route deviation detecting means for detecting a deviation of the vehicle from the guiding route on the basis of detection by the current position detecting means and guiding route information stored in the route storing means; map scale determining means for, when the route deviation detecting means detects an off-route deviation, determining a map scale such that it becomes possible to display in a map a route re-found on the basis of current position information detected by the current position detecting means; route output instructing means for instructing to output the re-found route stored in the route storing means; route display processing means for performing display processing of the guiding route found by the route finding means and display processing of the route re-found by the route finding means when an off-route deviation is detected, on the basis of the map scale determined by the map scale determining means; and outputting means for outputting guidance information based on the guiding route processed by the route display processing means. According to this invention, upon an instruction from the route output instructing means to start route guidance based on a re-found route, the route display processing means outputs the re-found route stored in the route storing means to the outputting means in order to perform route guidance based on the re-found route.

This construction, provided with the route output instructing means, allows a driver to start the route guidance based on a re-found route, at any location desired by the driver, considering the relation between the road on which the driver is currently driving and the previous route.

Preferably, the route display processing means has a function to produce a current position-centered display or a fixed-map display, and the route display processing means performs display processing when the re-found route is outputted on the basis of the map scale determined by the map scale determining means. Thus this construction is able to display re-found roads on a largest possible map scale.

In another preferred construction, the route display processing means adds guidance information based on the re-found route to a map that is displayed before the re-found route is outputted on the basis of the map scale determined by the map scale determining means. More preferably, the guidance information displayed in the map is the re-found route additionally displayed in such a display manner that it is possible to distinguish the re-found route from the previous guiding route, or the guidance information is additionally displayed on the previous guiding route. Thus the apparatus adds guidance information based on the re-found route to a map being displayed, so that users can obtain clear information necessary to return to the previous route.

The foregoing and further objects, features and advantages of the present invention will become apparent from the following description of preferred embodiments with reference to the accompanying drawings, wherein:
Fig. 1 is a block diagram showing the system construction of a vehicular navigation apparatus according to the present invention;
Fig. 2 shows search (guiding) road data;
Fig. 3 shows guiding road data;
Fig. 4 shows an example of the re-find condition setting screen;
Fig. 5 shows a map display screen for route guidance, illustrating an off-route deviation;
Fig. 6 illustrates the result of route re-finding performed after the detection of an off-route deviation during the auto-reroute-off mode;
Fig. 7 illustrates a screen displayed after the display processing of the result of route re-finding when the re-find switch shown in Fig. 6 is pressed;
Fig. 8 illustrates the result of route re-finding performed by timer interruption when the re-find switch is not pressed in the screen shown in Fig. 6;
Fig. 9 shows a screen following the screen of Fig. 8, illustrating the result of route re-finding afterwards;
Fig. 10 illustrates a screen displayed after the display processing of the result of route re-finding when the re-find switch is pressed in the screen shown in Fig. 9;
Fig. 11 shows the main flow of the route guiding operation from a current position to a destination;
Fig. 12 is a flowchart illustrating the off-route deviation operation;
Fig. 13 is a flowchart continuing from the flowchart shown in Fig. 12;
Fig. 14 is a flowchart illustrating another embodiment of the off-route deviation operation;
Fig. 15 is a flowchart illustrating the route re-find operation;
Fig. 16 is a flowchart illustrating another embodiment of the route re-find operation;
Fig. 17 is a flowchart illustrating the route recalculating operation for the surrounding route finding;
Fig. 18 is a flowchart illustrating the route recalculating operation for the entire route finding;
Fig. 19 shows a map display screen for route guidance, illustrating an off-route deviation;
Fig. 20 shows a screen following the screen shown in Fig. 19, illustrating map display provided after a change in map scale;
Fig. 21 shows a screen following the screen shown in Fig. 20, illustrating map display provided when the vehicle has deviated farther from the previous route;
Fig. 22 shows a screen following the screen shown in Fig. 21, illustrating map display provided after a change in map scale;
Fig. 23 shows the result of route re-finding;
Fig. 24 shows a screen following the screen shown in Fig. 23, illustrating the result of route re-finding after a change in map scale;
Fig. 25 shows a map display provided when the re-find switch is pressed;
Fig. 26 shows a map display screen when the vehicle has deviated from the route;
Fig. 27 shows a map display screen provided after a change in map scale;
Fig. 28 shows a map display screen provided when the vehicle is approaching an intersection (fork point) after the map scale has been changed;
Fig. 29 shows a screen following the screen shown in Fig. 28, illustrating an intersection picture;
Fig. 30 illustrates a method for determining a map scale that enables a re-found route to be displayed;
Fig. 31 illustrates the area that is displayed on the map scale determined thereby;
Fig. 32 is a flowchart illustrating the map scale changing operation;
Fig. 33 is a flowchart illustrating the map scale determining operation;
Fig. 34 is a flowchart illustrating another embodiment of the off-route deviation operation;
Fig. 35 is a flowchart illustrating another embodiment of the map scale changing operation;
Fig. 36 is a flowchart illustrating still another embodiment of the map scale changing operation;
Fig. 37 illustrates a map display screen where the previous route is partially out of the display area after the map scale has been changed;
Fig. 38 shows a corrected map display screen obtained by shifting the map display area of the screen shown in Fig. 37 so that the previous route comes completely within the display screen;
Fig. 39 shows a map display screen that displays the point at which the re-found route connects to the previous route;
Fig. 40 shows a map display screen wherein the direction to the destination along the previous route is indicated in a map displayed on the basis of the map scale changed after a route has been re-found;
Fig. 41 illustrates a node string road network;
Fig. 42 shows node string data;
Fig. 43 is a diagram for illustration of the selective display of landmarks with respect to the approach road to an intersection and the exit road from the intersection;
Fig. 44 shows the intersection data in which landmark data is defined;
Fig. 45 shows another embodiment of the landmark data structure;
Fig. 46 shows still another embodiment of the landmark data structure;
Fig. 47 is a flowchart illustrating the intersection picture preparing operation;
Fig. 48 is a flowchart illustrating the landmark display determining operation;
Fig. 49 shows another embodiment of the landmark display;
Fig. 50 shows a further embodiment in which landmarks are displayed in emphasized manners;
Fig. 51 illustrates the emphasized display of landmarks in a case where the approach road differs from that in the case of Fig. 50;
Fig. 52 illustrates a map where only the landmarks facing the route are displayed;
Fig. 53 illustrates a map where only the landmarks that are located on the route and ahead of the vehicle in the travel direction are displayed;
Fig. 54 illustrates a conventional landmark display in an intersection picture; and
Figs. 55 illustrate conventional examples of the landmark display.

Preferred embodiments of the present invention will be described hereinafter with reference to the accompanying drawings.

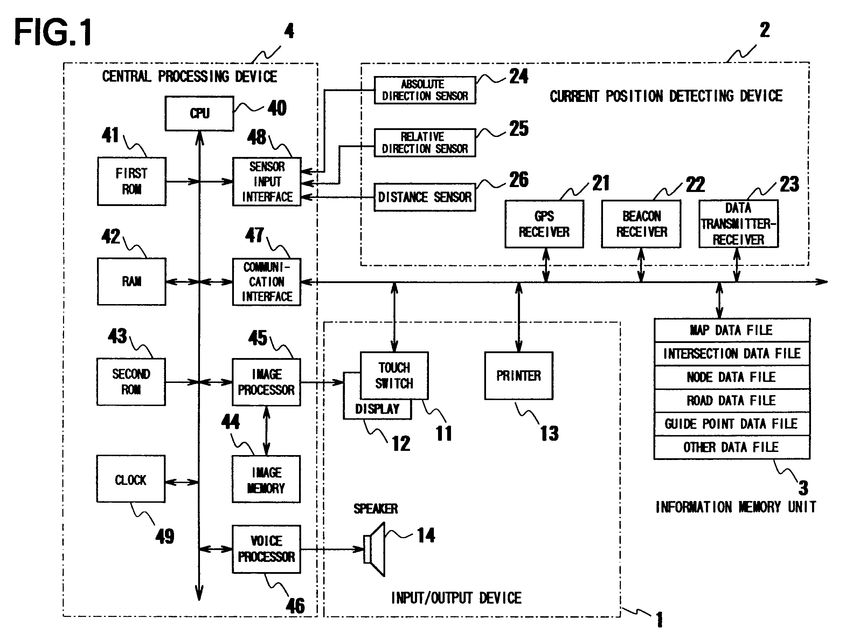

Fig. 1 shows the system construction of a vehicular navigation apparatus. The vehicular navigation apparatus of the present invention has an auto-reroute function to automatically perform route re-finding upon detection of an off-route deviation and, based on the result of route re-finding, switch from the previous guiding route to the re-found route, that is, the route obtained by the route re-find operation, and perform route guidance. The auto-reroute function has an auto-reroute-on mode for immediately starting route guidance based on the result of route re-finding, and an auto-reroute-off mode for storing the result of route re-finding and, upon a driver's instruction to output a re-found route, displaying the stored result of route re-finding and starting route guidance.

Referring to Fig. 1, the vehicular navigation apparatus comprises: an input-output device 1 for input and output of information regarding route guidance; a current position detecting device 2 for detecting information regarding the current position of a vehicle in which the navigation apparatus is installed; an information storage device 3 that stores navigation data needed for calculation of a route, guidance data needed for route guidance, and the like; and a central processing device 4 that performs the operations of route finding and the operations of processing graphic and voice guidance needed for route guidance, and that controls the entire system.

The input-output device 1 has a function to instruct the central control unit 4 to perform navigation processing upon the intention of a user, so that the user can input information necessary to set a departure point, a destination, a passing point and the like and the user can obtain voice output and/or display of guidance information when the user desires so. The input-output device 1 also functions to output to a printer the processed data, the data obtained through data communications and the like. As means for achieving these functions, the input section is made up of a touch switch panel 11 for inputting addresses, telephone numbers, coordinates and the like in order to set a destination and for requesting a route guidance. The output section comprises: a display 12 that displays route guidance automatically or upon a request from a driver; a printer 13 that prints data processed by the central processing device 4, data stored in the information storage device 3, and communication data; and a speaker 14 that outputs voice route guidance.

The display 12 comprises a collar CRT or a color liquid crystal display. The display 12 outputs in color all the display screens needed for navigation, for example, intersection picture screens, sectional route picture screens, destination setting screens and the like based on the guidance data and map data processed by the central processing device 4, and also displays, in a main screen, keys for setting up route guidance and for switching over display screens and pieces of guidance based on a current operation of route guidance. The touch switch panel 11 of the display 12 corresponds to the displayed function keys so that touching a key inputs a signal to perform a corresponding one of the aforementioned operations. The current position detecting device 2 comprises a GPS (a satellite navigation system) receiver 21 that utilizes the satellite navigation system, a beacon receiver 22, a data transmitter-receiver 23 for receiving a GPS correction signal by using, for example, a mobile telephone or an FM multiple signal, an absolute direction sensor 24 formed of, for example, a geomagnetic sensor, a relative direction sensor 25 formed of, for example, a wheel sensor or a steering sensor, and a distance sensor 26 for detecting a travel distance based on the number of rotations of a wheel. The current position detecting device 2 thus detects the travel direction and positional coordinates of the vehicle, and the like.

The information storage device 3 has a map data file storing map information or the like, an intersection data file storing information regarding intersections, a road data file storing information regarding roads, more specifically, the road types, the start and end points of each road, and the like, a node data file storing the east longitude-north latitude coordinates of a point on a road, a guidance point data file storing the positional coordinates of guide objects, such as service facilities, classified into various genres including gas stations and convenience stores, and guidance information regarding the guide objects, and other data files.

The central processing device 4 comprises: a CPU 40 that performs various operations by executing programs installed to accomplish the functions of the system; a first ROM 41 that stores programs for route finding or other operations, programs for performing voice output control required for voice guidance and display control required for route guidance, and that stores the data required for these programs; a memory 42 formed of a RAM, a nonvolatile memory or the like as a route storage means for storing road information (including road string data) acquired by route finding or re-finding and a storage means for temporarily storing route guidance information and the data being processed; a second ROM 43 that stores display data needed for route guidance and map display; an image memory 4 that stores image data to be used for screen display on the display; an image processor 45 for retrieving image data from the image memory on the basis of a display control signal from the CPU and performing image processing of the image data and outputting the processed data to the display; a voice processor 46 for synthesis of voice data (phrases, sentences, sounds and the like) retrieved from the information storage device 3 on the basis of a voice output control instruction from the CPU, and for converting the synthesized data into analog signals and outputting the analog signals to the speaker; a communication interface 47 that interfaces communication input and output data; a sensor input interface 48 for inputting sensor signals from the current position detecting device 2; and a clock 49 for writing date and hour data in internal diagnostic information. The central processing device 4 is designed so that a driver can select a screen display or a voice output for route guidance.

To achieve the functions according to the invention, the vehicular navigation apparatus comprises the following means. Destination setting means is constituted by: the CPU 40 for executing the programs stored in the first ROM 41 in relation to the destination setting operation; the touch switch panel 11 and the display 12 of the input-output device 1 for inputting a destination and outputting map display and guidance information; the image processor 45 for display processing such as map display or guidance information; and input-output processing means formed of the interface 47 for inputting a destination input signal from the touch switch panel 11 into the central processing device 4. Off-route deviation detecting means has a function to detect a deviation of the vehicle from the guiding route on the basis of the current vehicle position and the guiding route information. The off-route deviation detecting means is constituted by the CPU 40 for executing the programs stored in the first ROM 41 in relation to the off-route deviation detecting operation. Route finding means has a function to search for a route for guidance based on the departure point (vehicle current position) and the destination that are pre-set, and a function to re-search for or re-find a guiding route when an off-route deviation is detected. The route finding means is constituted by the CPU 40 for executing the programs stored in the first ROM 41 in relation to the route fining operation. Display scale determining means has a function to determine a scale that enables the display of a route re-found on the basis of the current vehicle position information when an off-route deviation is detected. The display scale determining means is constituted by the CPU 40 for executing the programs stored in the first ROM 41 in relation to the display-voice processing. Output means has a function to output guidance based on a found route, and is constituted by the CPU 40 for executing the programs stored in the first ROM 41 in relation to the display-voice processing, the image processor 45, the voice processor 46, the display 12, the speaker 14 and the like. Central processing means has a function to output guidance information based on a found guiding route and a detected current position, and is constituted by the CPU 40 for executing the programs stored in the first ROM 41 in relation to the guidance information outputting operation. Route output instructing means is provided for instructing to output the stored re-found route. The route output instructing means is constituted by a re-find switch incorporating the touch panel switch 11.

The detection of an off-route deviation is normally based on the map matching operation. The navigation apparatus determines whether the vehicle has deviated from the route by, for example, calculating the correlation of a found route and various matching factors, for example, the vehicle travel locus and the road shape, and determining that the vehicle has deviated from the route if the result of the correlation calculation exceeds a predetermined value.

This system determines a current position by calculating an estimated position based on GPS data and signals from various sensors for current position detection, and determining a position on a road in accordance with the correlation among the estimated position, the roads on a map and the GPS data. The system has a function to check the current position with the route to the destination and thereby determine whether the vehicle position on the currently traveling lane is approaching a predetermined guidance point. By this function, the system determines the timing of an automatic voice output or display output of intersection information, such as the name of a passed intersection along the guiding route, at a predetermined distance before the intersection or after it is determined that the intersection has been passed. Based on this timing determination, the system instructs the image processor and the voice processor to prepare pieces of guidance. In addition, upon input of a request signal, the system instructs the voice processor to prepare a voice guidance regarding the current position. The voice guidance of this system is prepared by synthesis of voice data (phrases, sentences, sounds and the like) retrieved from the information storage device 3. The synthesized voice guidance data are converted into analog signals and then outputted from the voice output section.

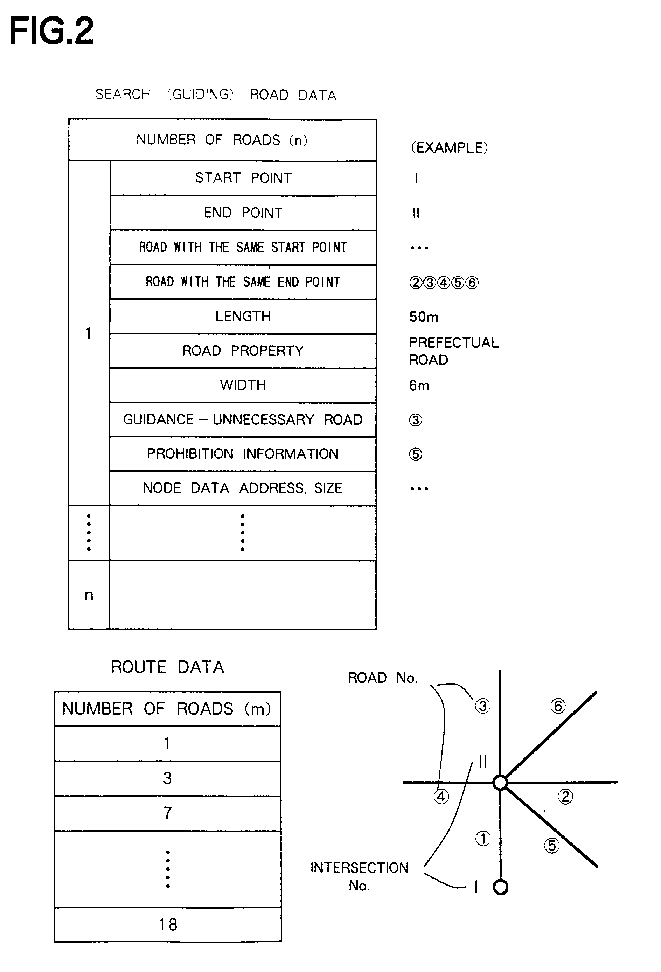

Next described will be the road data structure in connection with routes found by search. The data of the roads for route finding (guiding road data) has a data structure as shown in Fig. 2, in which the data of each road is stored together with the information about the roads connecting to that road, and the information characteristic of the road.

The data regarding each road also includes the start and end points (intersections or fork points) and Nos. of the roads connecting to the start and end points, thus storing information about the connecting relation among the roads. Also stored as characteristics of each road is the information about the road length, the road properties (express highway, national road, prefectural road and the like), the road width, and the like, so that these pieces of information serve as coefficients of the cost used as a reference for the route finding operation. In relation with the road connection information, the data regarding each road further includes: information about the road that needs no guidance (For example, as for a road (1) in Fig. 2, a road (3) is connected straight to the road (1) and, therefore, is a road that needs no guidance. A road that continuously connects thereto, if not straight connection, is also stored as a road needing no guidance.); and prohibition information (including 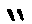 do not enter*"*), thus serving as costs in determining an optimal route during route finding. Besides the information pieces shown in Fig. 2, the cost determination may involve other factors. For example, the cost may be determined depending on which way (right or left) to turn (The right turn has a larger coefficient than the left turn since the right turn is harder to make.). Furthermore, the right-or-left turn coefficient may be changed depending on the size of intersections (The right or left turn at a larger intersection takes a longer time.). Beside the road length information, road shape information may be stored as road characteristic information so that winding roads are provided with increased costs.

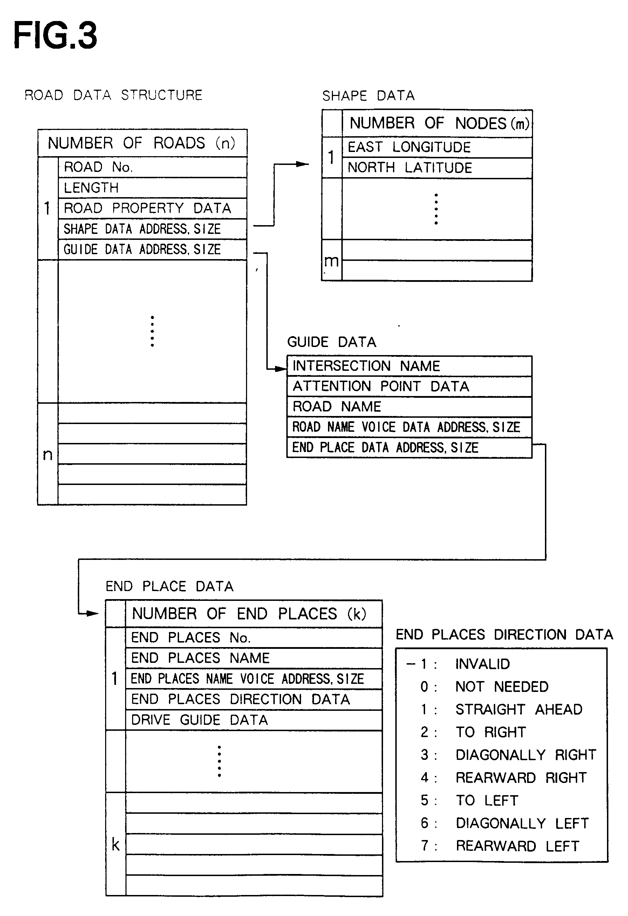

Fig. 3 shows an example of the structure of road data about guiding roads. The guiding road data is defined by road No., road length, road property data, road shape data address and size, and guide data address and size. The shape data expresses the shape of the corresponding road by the number of nodes, and each node is defined by the east longitude and the north latitude. If the calculation of remaining distance to a guidance intersection, which distance is to be displayed, uses the intersecting angle of the intersecting road as information of the next road to take, the shape data needs to be provided with the data about the intersecting angle of the next road with respect to the road on which the vehicle is currently running.

The guide data is defined by intersection name, attention point data, road name, road name voice data address and size, and end place data address and size. The end place data is defined by end road No., end place name, end place name voice data address and size, and end place direction data, and driving guide data. The end place direction data is defined by INVALID, NOT NEEDED, STRAIGHT AHEAD, TO RIGHT, DIAGONALLY RIGHT, TO LEFT, DIAGONALLY LEFT, REARWARD LEFT, and the like.

For guidance at fork points or intersections, the vehicular navigation apparatus retrieves the end place data of the guiding road data and, based on the end place data, determines the guidance content (mainly, guidance expressions to be added to fixed guidance expressions) to be outputted. The end place data is thus added particularly at fork points or intersections where it is difficult to make out the direction to go on the basis of the exit road angle alone, such as where a plurality of roads extend from a fork point with small angle differences, for example, the exits from express highways.

The various data constituting the guiding road data will be described. The road property data represents the physical characteristics, such as the number of lanes, elevated roads, and underground roads. The elevated/underground data includes information about whether a road is an elevated road, a road on the side of an elevated road, an underground road, or a road on the side of an underground road. The lane data includes information about whether a road has one lane, two lanes, more than two lanes, or no median line. Roads branching from elevated roads are classified as 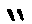 side of elevated road*"*. With regard to tunnels, a likewise classification manner is applied.

The road name data is defined by road type and road No. in the corresponding road type. The road types employed are (name): express highway, city express highway, toll road, ordinary road including national or prefectural road. The type data of express highway, city express highway and toll road are defined by major road and minor road. The minor roads mean roads connecting from the major roads to ordinary roads or to other major roads.

The attention point data provides information to call attention to changing road conditions. For example, rail road crossing, tunnel entrance and exit, road width reduction point, no attention point are defined.

The drive guide data is provided for ensuring safe driving in preparation for the next drive guide during driving in a wide road or a road with two or more lanes. The drive guide data provides for various pieces of guidance, for example, 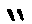 go along right side*"* for a turn to the right or a travel direction shift diagonally to the right and, likewise, 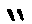 go along left side*"*, and 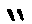 go in middle*"* for passing straight through intersections, and 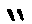 no guidance*"* when no guide is needed so that a driver just follows the road.

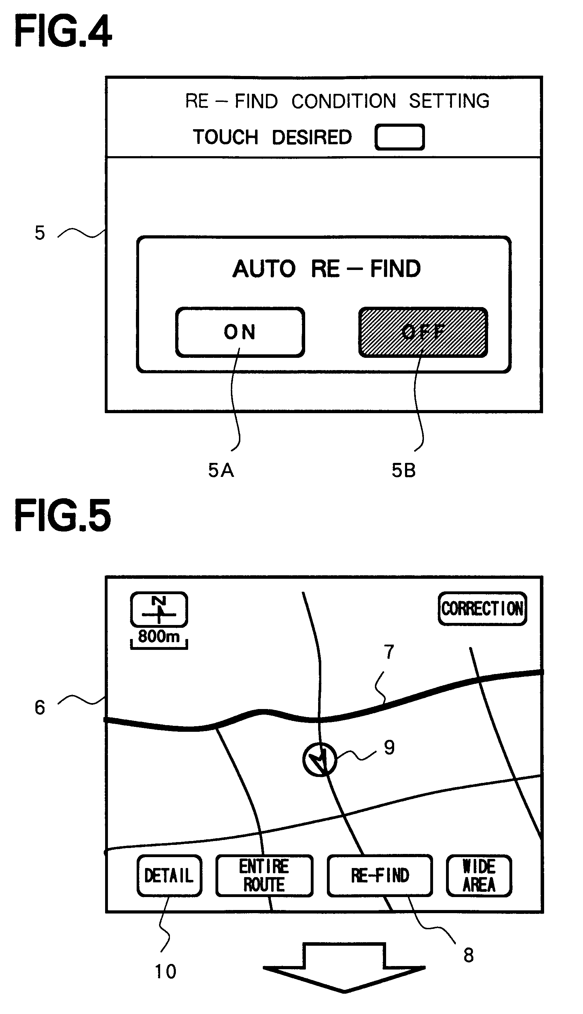

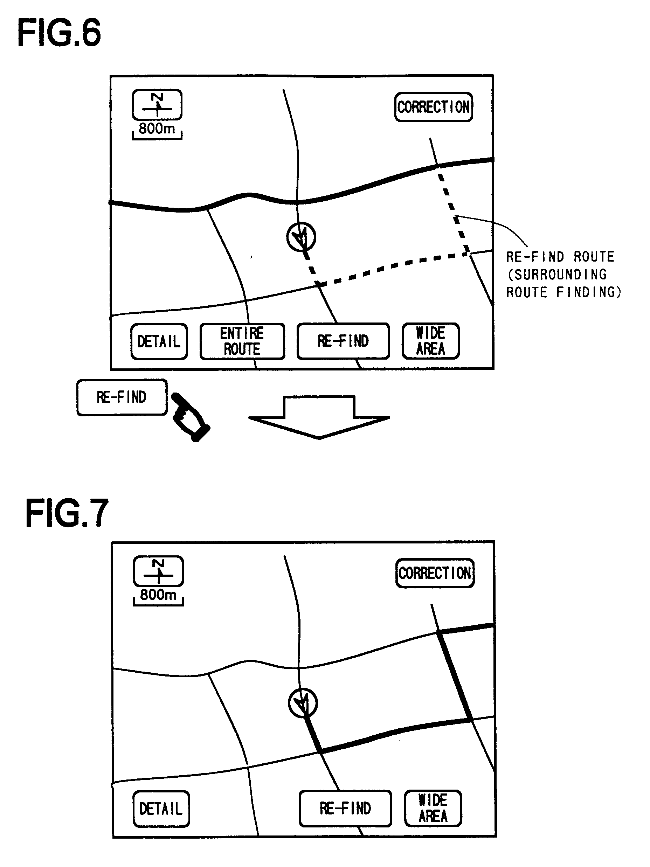

The general idea of the route re-find operation according to the invention will be described with reference to display screens. For the destination setting, a re-find condition setting screen as shown in Fig. 4 is used to select the automatic re-finding (auto-reroute). If ON is selected during the route guidance based on a map display shown in Fig. 4, the navigation system automatically executes the surrounding route finding with respect to an area around the current position indicated by a current position symbol 9 displayed in the map, upon detection of an off-route deviation, and then re-calculates a route to the guiding route 7 and displays the re-find route. If OFF is selected, the system displays the re-find switch 8 in the screen upon detection of an off-route deviation, and notifies the off-route deviation. Simultaneously, the system also executes re-finding as an internal operation and stores the re-found route in the route storing means. The route determined by this internal operation will not be immediately subjected to display processing. Wile the auto-reroute-off mode is selected, as for example, by depressing the re-find switch displayed upon detection of an off-route deviation, the system will immediately start route re-finding. For the route re-find operation, the surrounding route finding or the entire route finding may be preset manually so that the preset mode of route re-finding will be performed upon detection of an off-route deviation. Another manner of mode setting is also possible whereby, upon detection of an off-route deviation, the system performs the surrounding route finding for a predetermined travel distance, and then switches to the entire route finding after the vehicle has traveled that distance. Fig. 5 shows screen operating switches 10 that includes switches for a detailed map, an entire route display, a wider area map and correction in addition to the re-find switch 8 according to this example.

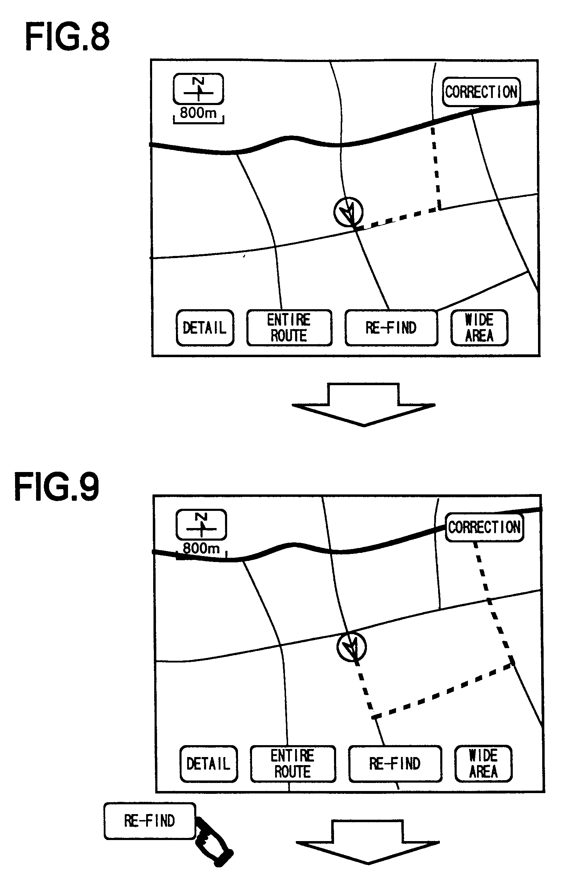

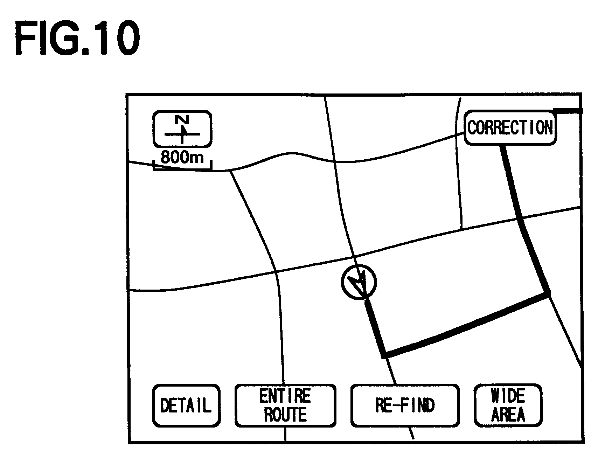

If the re-find switch is not pressed, the system performs the surrounding route finding as indicated in Fig. 6, but does not perform the display processing of the re-found route and, instead, stores the re-found route (indicated by the dotted line in Fig. 6) in the route storing means. When the re-find switch is pressed during driving on a guidance-possible road, the system displays the stored re-found route as a new guiding route connecting to the previous guiding route (see Fig. 7) . Until the re-find switch is pressed, the route re-find operation is repeated at fixed intervals by interruption and the stored route is updated on the basis of the result of the route re-find operation. More specifically, if while a re-found route as indicated in Fig. 8 is stored the system determines a different re-found route as indicated in Fig. 9 as a result of the surrounding route re-finding with priority given to the traveling direction, the stored guiding route as indicated in Fig. 5 is updated on the basis of the currently-determined re-found route. Therefore, the route determined by the re-find operation can be displayed as in Fig. 10 immediately when the re-find switch is pressed.

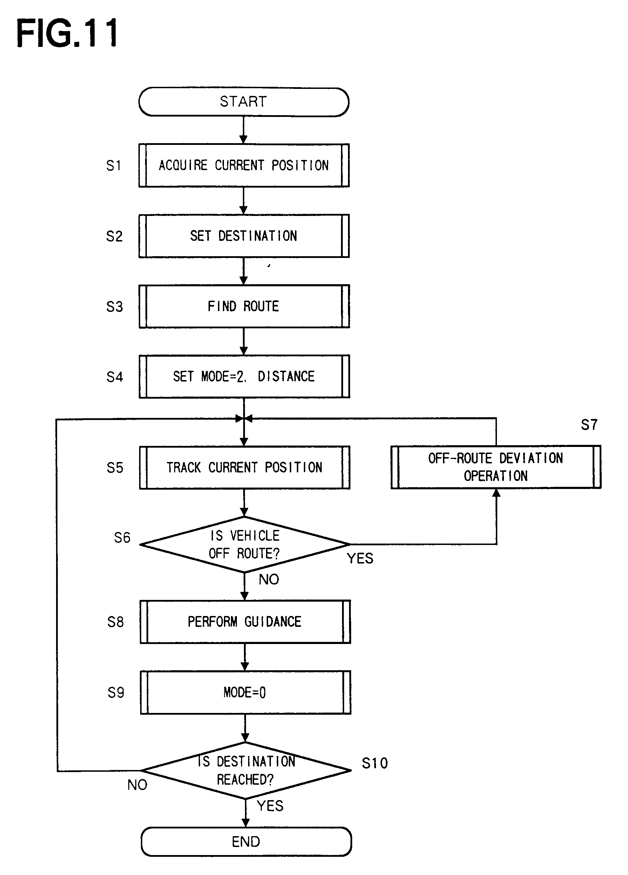

Next described will be the operations performed by a system having a function to re-find an optimal route when an off-route deviation is detected. Fig. 11 shows a flow of the operation to perform route guidance starting with the setting of a destination. The system first acquires a current position (departure point) necessary for route finding (S1), sets a destination by inputting destination setting conditions through the destination setting screen (S2), and then performs route finding (S3). In addition, a driver determines whether the route re-finding is to be performed automatically (auto-reroute-on mode) or in response to the intention of the driver (auto-reroute-off mode), that is, the user sets the auto-reroute function on or off as a route re-find condition.

After a route is found, the system sets MODE=2 to indicate the end of the route finding operation, and sets a distance from the guiding route as a basis for detection of an off-route deviation (S4). When the guidance start switch is pressed to start route guidance based on the found route, the system determines the position of the vehicle in which the system is installed, and starts tracking the current position (S5). Then, the system measures the distance between the current position to the set route, and detects an off-route deviation depending on whether the measured distance exceeds the value (predetermined distance) set in step S4 (S6). If an off-route deviation is detected, the system executes the off-route deviation operation (S7). The off-route deviation operation in the auto-reroute-off mode constantly computes a re-found route to the destination and stores it in the route storing means. During the auto-reroute-off mode, the off-route deviation determining operation in step S6 is performed on the basis of the route set before the detection of an off-route deviation, not the latest route determined by the route re-finding.

If the vehicle has not deviated from the route, the system continues to perform guidance based on the preset route (S8). While the vehicle is on the route, the system sets MODE=0 to indicate that it is no the route, and measures the remaining distance from the current position to the destination (S9), and determines whether the destination is reached depending on whether the remaining distance has become equal to or less than a predetermined value (S10). If the remaining distance has become less than the predetermined value, the system determines that the destination is reached and ends the route guidance. If the remaining distance is greater than the predetermined value, the operation returns to step 5 to track the current position. The off-route deviation detection is performed by timer interruption.

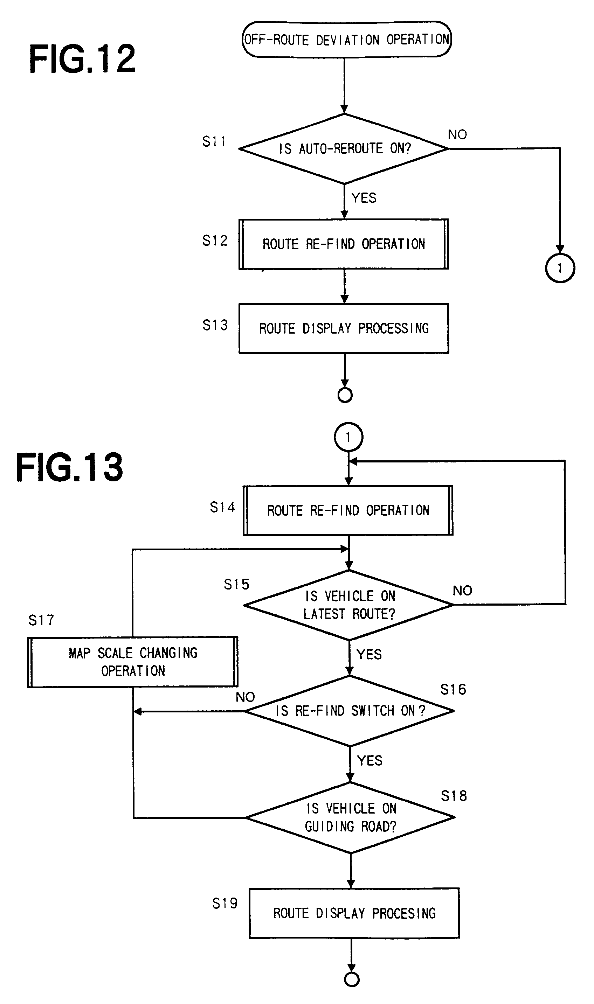

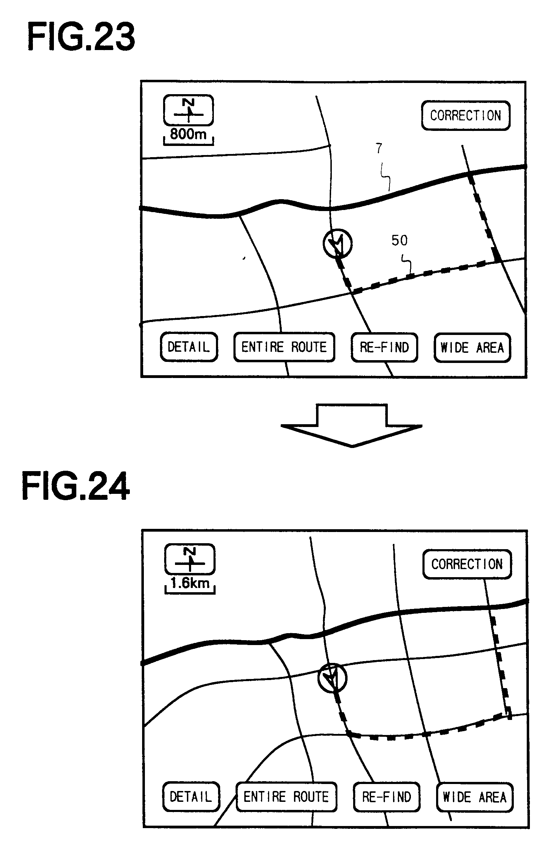

If step S6 detects an off-route deviation, the system executes the off-route deviation operation illustrated in Figs. 12 and 13. The system first checks the selected mode of the auto-reroute (S11). If it is the on mode, the system executes the route re-find operation (S12), and displays there-found route after the display processing (S13). If it is the off mode, the system executes the route re-find operation (S14), and determines whether the current position is on the re-found route (latest route) (S15). If the vehicle has further changed its route, that is, if the current position is off the latest route, the system executes the route re-find operation again (S14). If the current position is on the latest route, the system checks whether the re-find switch is operated (S16). If the re-find switch is not pressed, the system executes the map scale changing operation (Fig. 24) described later (S17), and then returns to step S15. If the re-find switch is pressed, the system determines whether the current road is a road where guidance is possible (S18). If it is not a guidance-possible road, the system executes the map scale changing operation and returns to step S15. If it is a guidance-possible road, the system performs the route display processing and displays the route (S19). Through these operations, if the map scale is changed, the system uses the current map scale to display the re-found route and the previous route. If the map scale is changed, the system uses the revised scale to display the re-found route and the previous route. The aforementioned guidance-possible road means a road that is available for the route finding operation. The data of such roads is different from that of the roads stored for display (such as local roads).

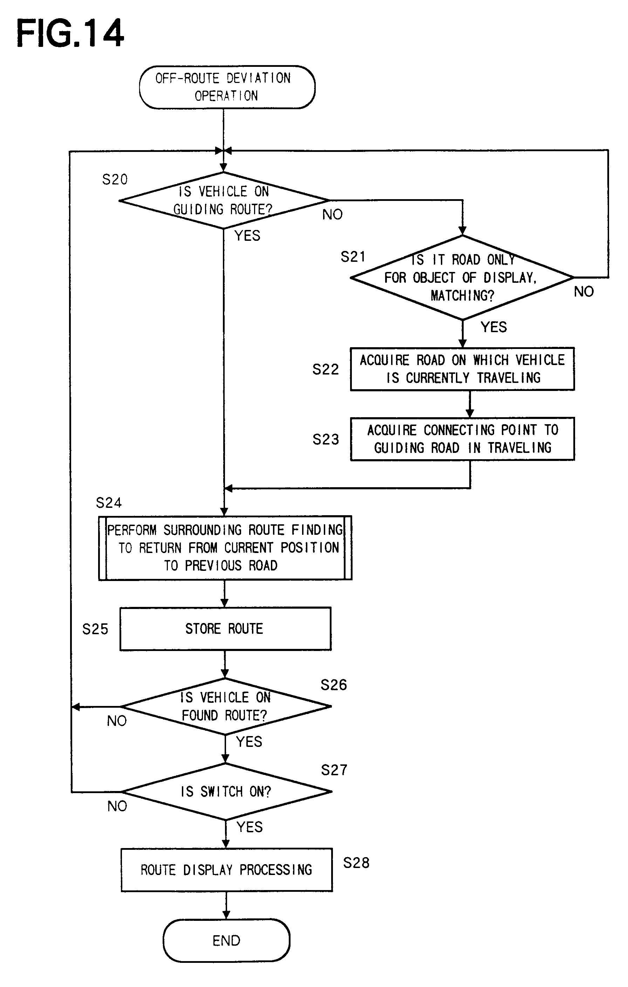

Another embodiment of the off-route deviation operation will be described with reference to Fig. 14. Upon detection of an off-route deviation, the system determines whether the current position is on a guidance-possible road (S20). If it is on a guidance-possible road, the system executes the surrounding route finding to find a route from the current position back to the previous route (S24). If the current position is not on a guidance-possible road, the system determines whether the vehicle is on a road stored merely for display or matching operation, such as a local road or a road with a predetermined width or less (S21). If the vehicle is not on such a road, for example, when the vehicle is traveling in a facility such as a parking space or other large space, the operation returns to step S20. If the vehicle is a road as described above, the system acquires data about the road on which the vehicle is currently traveling (S22), and acquires the connecting point to a guidance-possible road located ahead of the vehicle (S23). Based on the acquired road data and connecting point data, the system executes the surrounding route to find a route from the current position back to the previous route (S24).

The system then stores the route determined by the surrounding route finding (S25), determines whether the vehicle is on the determined route on the basis of the current vehicle position information (S26). This determination is performed at the time point when the vehicle has entered the guidance-possible road through the connecting point.

If the vehicle is on a guidance-possible road, the system performs the route display processing and displays the re-found route (S28) when the re-find switch is pressed (S27). If step S26 or S27 determines that the vehicle is not on the re-found route, or that the re-find switch is not pressed although the vehicle is on the re-found route, the operation returns to step S20. Although this embodiment does not determine whether the auto-reroute function is in the on mode, it is permissible to design to determine whether the auto-reroute function is set for use, in a processing step following a processing point (1) in Fig. 13.

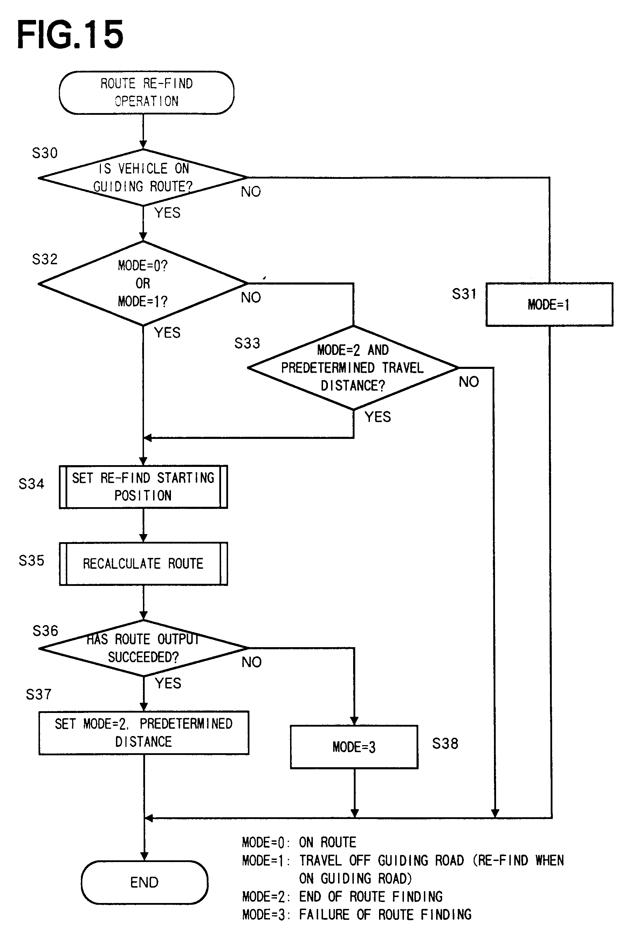

The route re-find operation will next be described. The result of route re-finding is immediately subjected to the route display processing and displayed in a map screen during the auto-reroute-on mode. On the other hand, during the auto-reroute-off mode, the system stores the result in the route storing means as an internal operation and, when a driver presses the re-find switch, the navigation system performs the display processing of the stored route. Fig. 15 shows the flow of the route re-find operation.

When the route re-find operation is started, the system first determines whether the current position is on a guidance-possible road (S30). If the current position is not on a guidance-possible road, the system sets MODE=1 to indicate that the vehicle is traveling off the guiding roads, and performs route re-finding when the vehicle returns to a guidance-possible road (S31). If the vehicle is traveling on a guidance-possible road after MODE=1 has been set by the route re-find operation performed during driving off the guiding routes, the system determines whether the vehicle is on the route (MODE=0) or off the guiding roads (MODE=1) (S32). If MODE=0 or MODE=1, the system sets a start point for route re-finding (S34).

When neither MODE=0 nor MODE=1, the system determines whether the route re-find operation has ended (MODE=2) and the vehicle has traveled a predetermined distance on a guidance-possible road (S33). If the MODE=2 and predetermined travel distance requirements are met, the system sets a start point of route re-finding (S34). Step S33 makes negative determination in a case, for example, where the vehicle travels on a guidance-possible road in a direction opposite to the direction to the route after the route finding. Even in such a case where the vehicle has traveled in the opposite direction, the system will start route re-finding after the vehicle travels the predetermined distance.

For the re-find start position setting operation, the system is designed to set the position to start, for example, route re-finding, in a map at a point predetermined distance ahead of the vehicle in the traveling direction. This system design is made considering that the route re-finding takes some time and that the vehicle is traveling. That is, the system design reduces inconvenient incidents, for example, where the route re-find operation determines a route that requires an immediate turn to the right or left, or where a route thus determined requires a quick action such that a driver cannot safely perform after the route is displayed by pressing the re-find switch, or where a route determined by the route re-find operation started at a position before an intersection requires the right or left turn at that intersection but the vehicle has passed the intersection by the end of the route re-find operation, so that the driver may have to immediately start route re-finding again.

When a re-find start position is set, the system recalculates a route (S35), and checks the result of recalculation (S36). If a route is found by the route recalculation (affirmative determination on the success of route output), the system sets MODE=2, and ends the operation. If no route is found by the route recalculation (negative determination on the success of route output), the system sets MODE=3 to indicate a failure in route finding (S38), and ends the operation. The cases where no route is outputted vary depending on the route finding programs installed in systems. For example, if the program is set so as not to output any U-turn route, the system performs route finding with priority given to the vehicle traveling direction at the time of detection of an off-route deviation. With this program setting, the system determines that there is no route obtained by route re-finding, if the vehicle is currently traveling on a dead-end road. The program may also be set so that if the distance from the current position to the destination along a re-found route is greater than the multiplication product of a predetermined value and the distance from the current position to the destination via the previous route, the system outputs no re-found route. That is, the program is set so that if the result of route re-finding does not meet the predetermined conditions, the system outputs no re-found route.

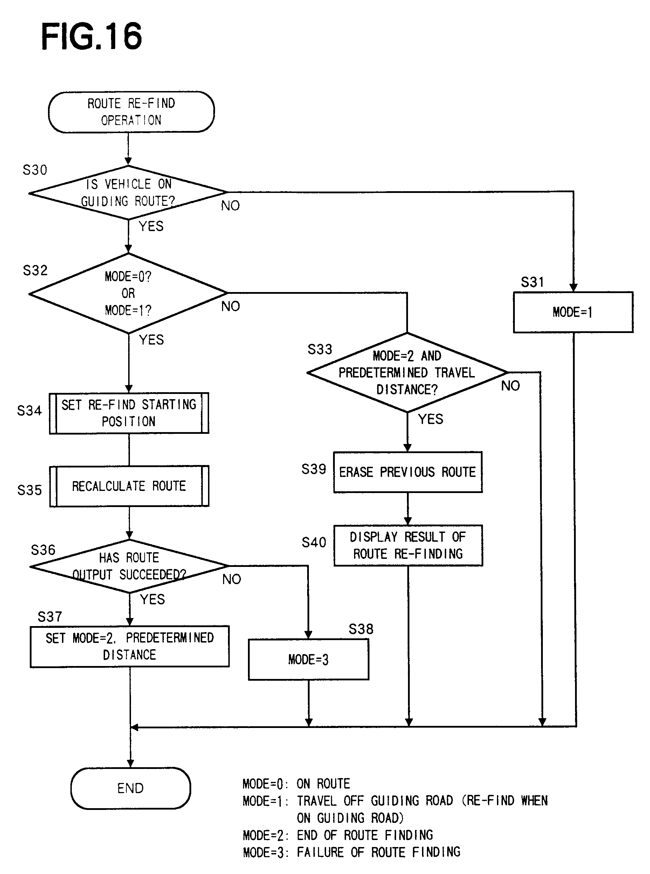

Fig. 16 illustrates another embodiment of the route re-find operation. This embodiment performs route re-finding and additionally displays the re-found route as guidance information (as indicated by the dotted lines in Figs. 6, 9) before a driver presses the re-find switch. This embodiment differs from the route re-find operation illustrated in Fig. 13 in that the embodiment displays a re-found route after determining that the MODE=2 and predetermined travel distance requirements are met in step S33. The other processing is the same as in Fig. 13 and will not be described again.

Since MODE=2, route re-finding has ended. Therefore, if the vehicle has traveled a predetermined distance on a guidance-possible road, the system erases the previous route, that is, the guiding route on which the vehicle was traveling before the detection of an off-route deviation (S39), and displays the result of route re-finding (S40).

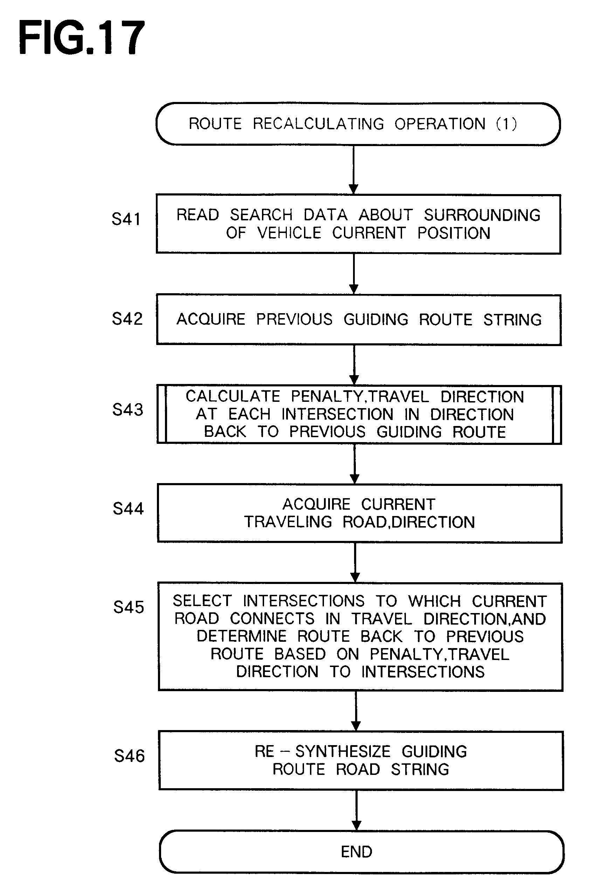

The route recalculation in step S35 involves the surrounding route finding and the entire route finding with priority given to the vehicle traveling direction. Fig. 17 illustrates an example of the surrounding route finding operation. The system reads from the information storage device 3 the search data (road data, intersection data, etc.) regarding the area around the vehicle (S41). Then the system acquires the road string data about the guiding route used before the off-route deviation (hereinafter, referred to as 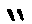 previous route*"*) from the route storing means constituted by the memory 42 provided in the central processing device 4 (S42). The route is defined by the road string obtained by connecting inter-intersection roads. The aforementioned 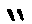 acquire*"* means to retrieve data from the route storing means into the work region of the route finding means. The system then calculates the driving direction and penalty at each intersection on the basis of the direction to return to the previous route (S43). The aforementioned penalty is a coefficient determined on the basis of the road type, road length, road width, right or left turn, presence of traffic lights, traffic regulations, etc. If a route does not connect because of do-not-enter, one-way or the like or a route requires a U-turn, the system determines a penalty of 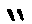 ∞*"*. This surrounding route operation re-determines penalties based on the direction to return to the previous route, in order to find an optimal route.

The system then acquires the road on which the vehicle is currently traveling and the traveling direction based on the current position information from the current position detecting device and the map information from the information storage device (S44). Subsequently, the system selects intersections to which the current road connects in the traveling direction, and determines a route to return to the previous route on the basis of the penalties and the travel directions to the intersections (S45). The system then combines the found route and the previous route extending ahead, and synthesizes the road string of a new guiding route (S46).

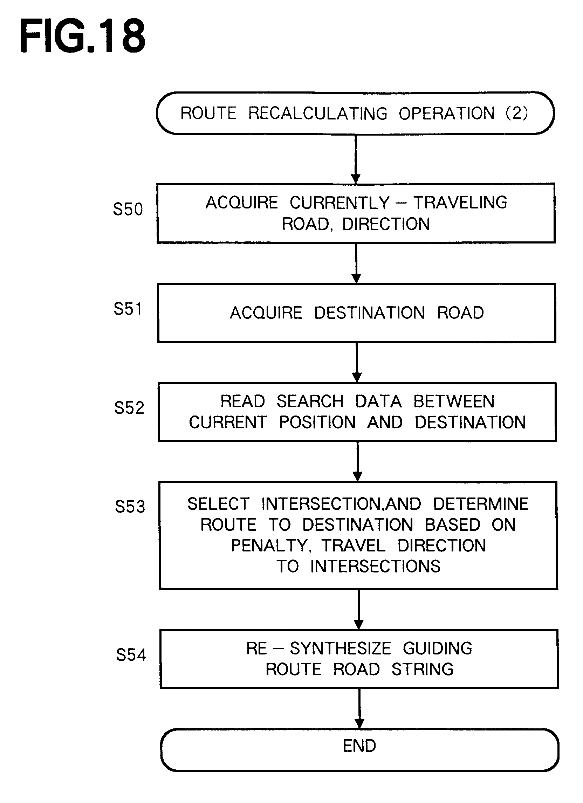

Fig. 18 illustrates the entire route recalculating operation with priority given to the travel direction. Based on the current position information from the current position detecting device and the map information from the information storage device, the system acquires the road on which the vehicle is currently traveling and the traveling direction (S50), and acquires the destination road (S51). The system then reads the search data between the current position and the destination (S52). Subsequently, the system selects intersections to which the current road connects in the traveling direction, and determines a route to return to the previous route on the basis of the penalties and the travel directions to the intersections (S53). The system then re-synthesizes the road string of the determined route as a guiding route (S54).

When carrying out the invention, the route re-find operation may perform either the surrounding route finding or the entire route finding. For example, in a construction where the surrounding route finding or the entire route finding is pre-specified by a manual operation, the two modes of the route re-find operation are respectively provided with mode changing routines, so that the re-find program is executed corresponding to the specified mode.

Other methods of changing over the surrounding route finding and the entire route finding may be employed. In one method, the route determined by the surrounding route finding is first outputted when the re-find switch is pressed after the detection of an off-route deviation, and then the entire route finding is executed if the re-find switch is pressed within a predetermined time or a predetermined travel distance. In this method, it is permissible either to determine a route by the surrounding route finding and a route by the entire route finding and store the routes in the route storing means, or to first calculate only a route by the surrounding route finding and store the route, and calculate an entire route when the re-find switch is operated for the second time.

In addition, this invention is applicable to a vehicular navigation apparatus that has a manual reroute function to start route re-finding upon a driver's instruction.

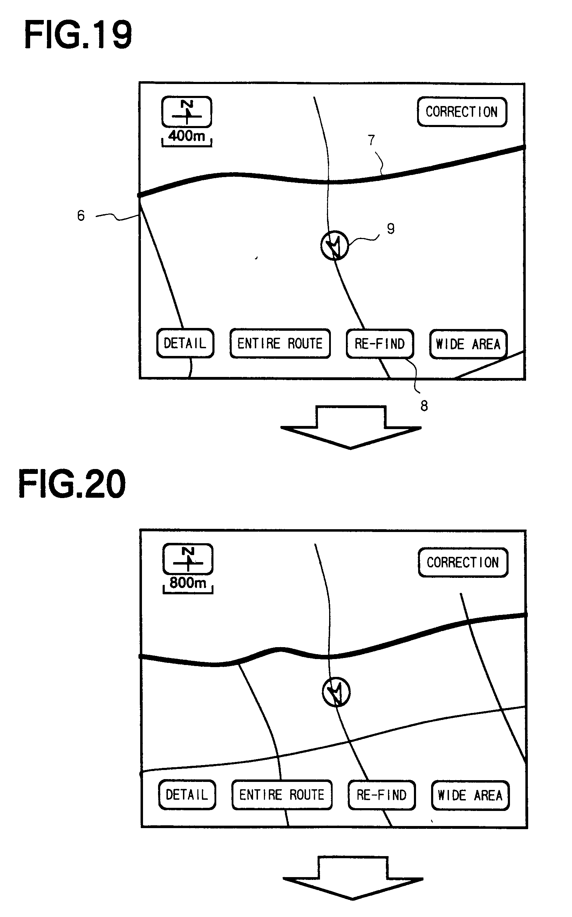

The general idea of the automatic display scale changing function according to the present invention will be described with reference to display screens. The description will be based on the current position-centered display. For the destination setting, a re-find condition setting screen shown in Fig. 4 is used to select the automatic re-finding (auto-reroute). If ON is selected, the navigation system automatically executes the surrounding route finding upon detection of an off-route deviation, and then re-calculates a route to the guiding route and displays the route. If OFF is selected, the system displays the re-find switch 8 in the screen upon detection of an off-route deviation, and notifies the off-route deviation. Simultaneously, the system also executes re-finding as an internal operation and stores the re-found route in the route storing means. The route determined by this internal operation will not be immediately subjected to display processing. If an off-route deviation is detected, for example, while the auto-reroute-off is selected, the system displays the re-find switch 8 it a map display screen 6 as shown in Fig. 19. Re-finding is then executed by a re-find method (the entire route finding or the surrounding route finding) pre-set in the system.

If the re-find switch is not pressed, as the vehicle goes away from the guiding route 7 the guiding route will go out of the map display unless the map scale is changed after the detection of an off-route deviation. According to a feature of the invention, before the guiding route 7 shifts to a display portion where the route becomes difficult to visually grasp, the system switches to a map scale based on the result of re-finding, such that the map can help a driver to return from the current position to the guiding route, that is, such that the map allows the driver to grasp by a glance which way the vehicle is going with respect to the guiding route. In a case as shown in the map display screen 5 where the vehicle has come a predetermined distance from the guiding route 7, if the current scale is 1:40,000, the system will switch to a scale based on the result of re-finding as the vehicle goes on. According to this embodiment, the scale is switched to 1:80,000 as shown in Fig. 20. If the vehicle further goes on, the system will determine another scale based on the result of re-finding and perform display processing based on the new scale.

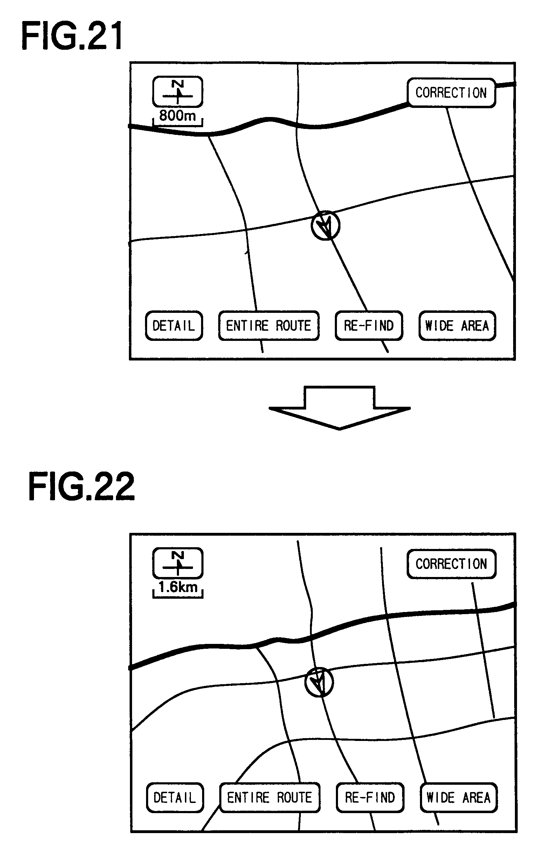

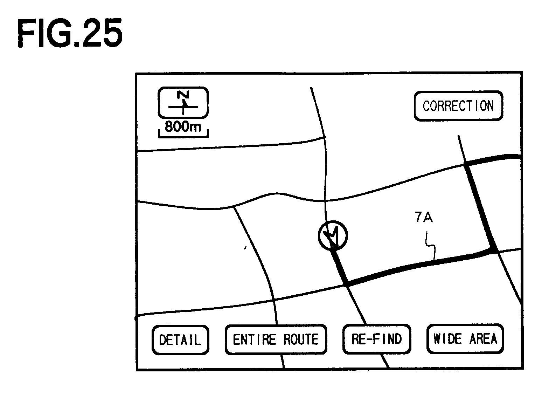

According to this embodiment, the scale is changed from 1:80,000 to 1:160,000 so that the display is switched from a screen as shown in Fig. 21 to a screen as shown in Fig. 22. The system thus changes the scale, performs display processing, and stores the re-found route in the route storing means. For example, in a case where a route 50 indicated by the dotted lines in Fig. 23 and 24 is determined by re-finding, the system does not perform the display processing of the re-found route 50. If there-find switch in the screen shown in Fig. 23 or 24 is pressed, the system performs the display processing of the stored re-found route (indicated by the dotted line). As a result, the system displays a new guiding route 7A to return from the current position to the previous guiding route through the re-found route in the currently displayed map. If the re-find switch is pressed with the map display screen shown in Fig. 23, the new guiding route 7A is displayed as in a screen shown in Fig. 25.

As described above, if the re-find switch is not pressed, the navigation system executes the surrounding route finding and stores the re-found route in the route storing means. Until the re-find switch is pressed, the system executes this re-find operation at fixed intervals by interruption and, based on the result of operation, updates the stored re-found route. As a result, the re-found route will be displayed immediately when the re-find switch is pressed.

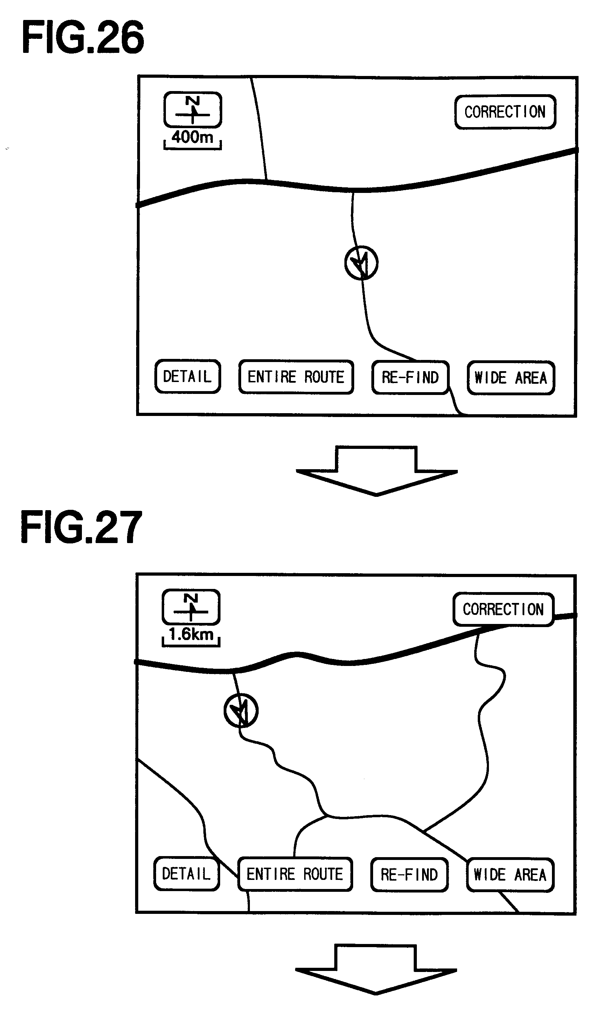

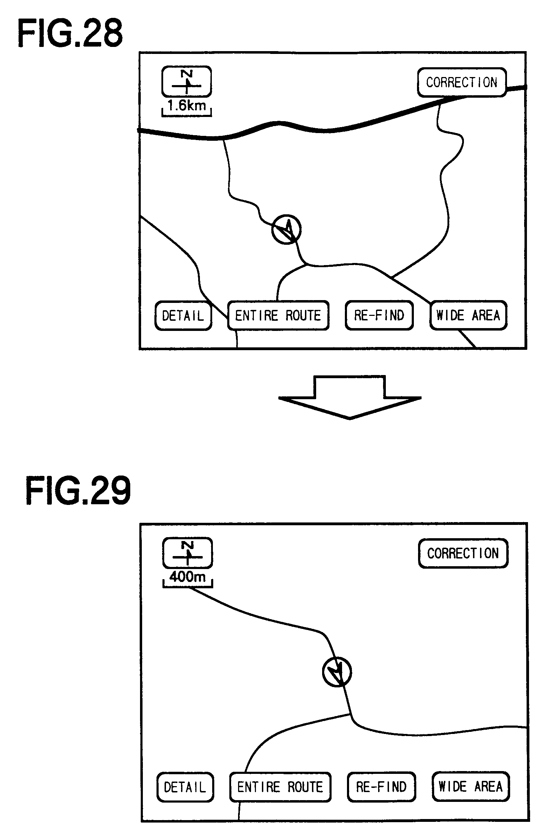

Next described will be the display processing based on the map-fixed display. The general idea of the display processing will first be described with reference to display screens. After the detection of an off-route, the vehicle continues to travel farther away from the guiding route while the map display shown in Fig. 26 is displayed. When the vehicle comes to such a position that the guiding route becomes hard to recognize on the present map scale, the system changes the map scale, for example, the screen of Fig. 26 to the screen of Fig. 27, so that the positional relation of the guiding route with respect to the current position and traveling direction can easily be recognized. If a user presses the detail switch to confirm which direction to take at an approaching fork point while driving with reference to the map on the changed scale, a detailed map around the current position is displayed. In an example method of switching to a detailed map, the switching to a detailed map, for example, the screen of Fig. 28 to the screen of Fig. 29, is automatically performed when the vehicle approaches the corresponding intersection. With regard to the scale after the vehicle passes the intersection, it is permissible either to maintain the changed scale, or to automatically switch back to the previous scale.

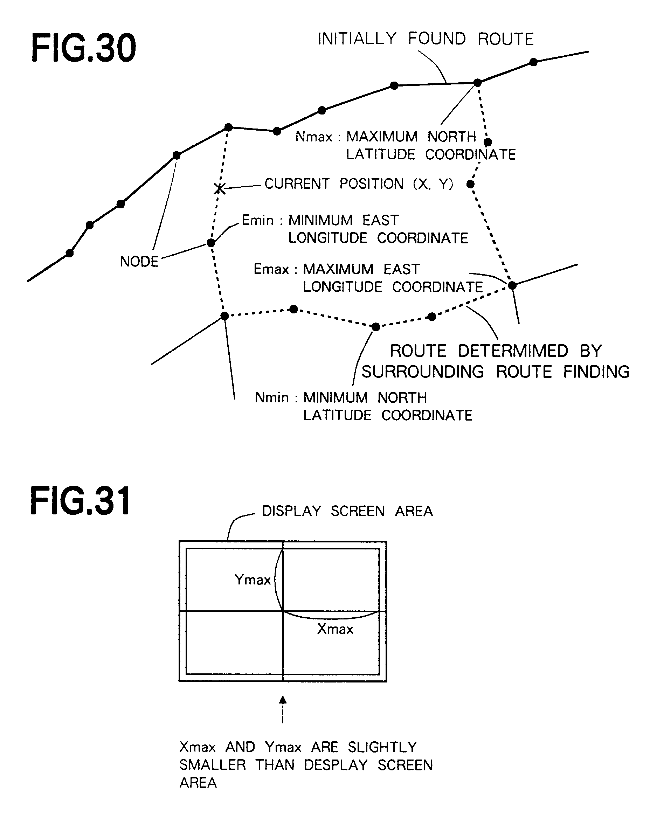

The map scale is determined depending on the relation among the initially found route, the current position and the route determined by the surrounding route finding. Referring to Fig. 30, when the system determines a route by the surrounding route finding (indicated by the dotted like) performed for route re-finding based on the current position (X, Y) after the vehicle has deviated from an initially found route (indicated by the thick solid like), the area covering the initially found route, the current position and the route determined by the surrounding route finding can be defined by the following coordinates: the minimum east longitude coordinate Emin and the maximum east longitude coordinate Emax along the X-axis, and the minimum north longitude coordinate Nmin and the maximum north longitude coordinate Nmax along the Y-axis. To display this area in a screen, the Xmax and Ymax are set slightly small, relative to the size of the display screen area.

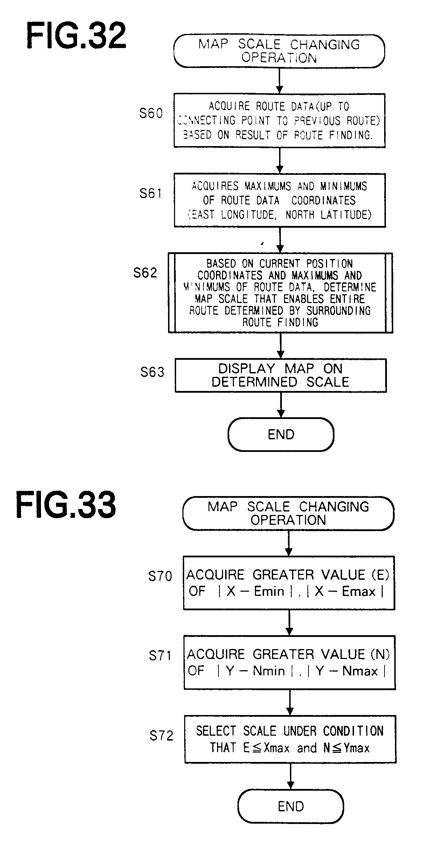

Referring to Fig. 32, when the map scale changing operation is started, the system acquires the route data (about a route up to the connecting point to the previous route) based on the result of route finding (S60), and acquires the maximum and minimum values (Emax, Emin, Nmax, Nmin) of the coordinates (east longitude and north latitude) of the route data (S61). Based on the maximum and minimum values of the route data and the current position coordinates (X, Y), the system determines a map scale that enables display of the entire route determined by the surrounding route finding (S62). The system then displays a map based on the determined scale (S63). The map scale determining operation in step S62 will be described with reference to Fig. 33. The system first acquires the greater value (E) of |X - Emin| and |X - Emax| (S70), and acquires the greater value (N) of |Y - Nmin| and |Y - Nmax| (S71). Under the condition that E ≤ Xmax and N ≤ Ymax, the system selects the largest scale (S72).

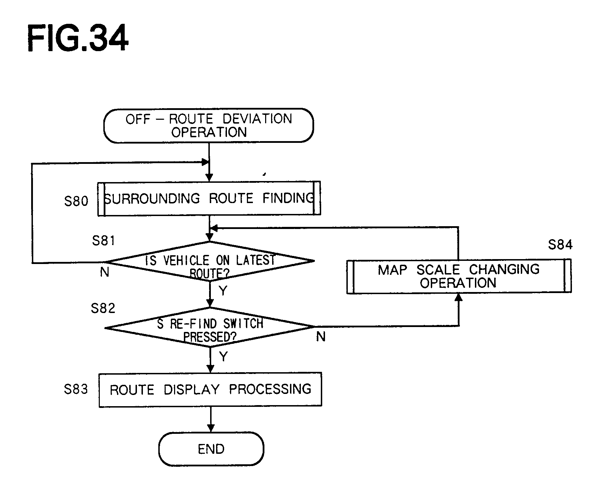

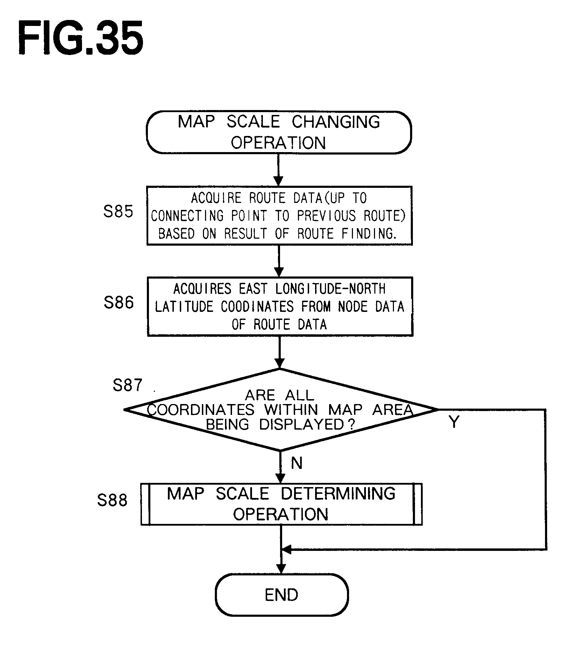

Another embodiment of the off-route deviation operation will be described with reference to Figs. 34 and 35. Referring to Fig. 34, upon detection of an off-route deviation, the system executes surrounding route finding (S80), and determines whether the current vehicle position is on the re-found route (latest route) (S81). If it is not on the latest route, the operation returns to step S80 to execute surrounding route finding again. If the current position is on the latest route, the system determines whether the re-find switch is operated (S82). If the switch is turned on, the system performs route display processing based on the latest route (S83), and displays the guiding route. If the re-find switch is not pressed, that is, if the vehicle continues to travel on the latest route, the vehicle may go farther apart from the previous route. Considering such incidents, the system executes the map scale changing operation (S84) if the re-find switch is not pressed. Then, the system determines whether the vehicle is on the latest route (S81). By repeating this processing until the re-find switch is pressed, the system can display the entire route determined by surrounding route finding when the re-find switch is pressed.

The map scale changing operation will be described with reference to Fig. 357. The system acquires the route data (about a route up to the connecting point to the previous route) based on the route finding (S85), and acquires the east longitude-north latitude coordinates from the node data of the route data (S86). Based on the coordinates data, the system determines whether all the coordinates are within a map area being displayed (S87). If not all the coordinates are within the area, that is, if the coordinates of any point are outside the area, the system executes the map scale determining operation (S88). After the system makes affirmative determination in step S87 (that is, all the coordinates are within the area) or after the system determines a map scale by executing the map scale determining operation, the system ends this routine to proceed to step S81 in Fig. 34.

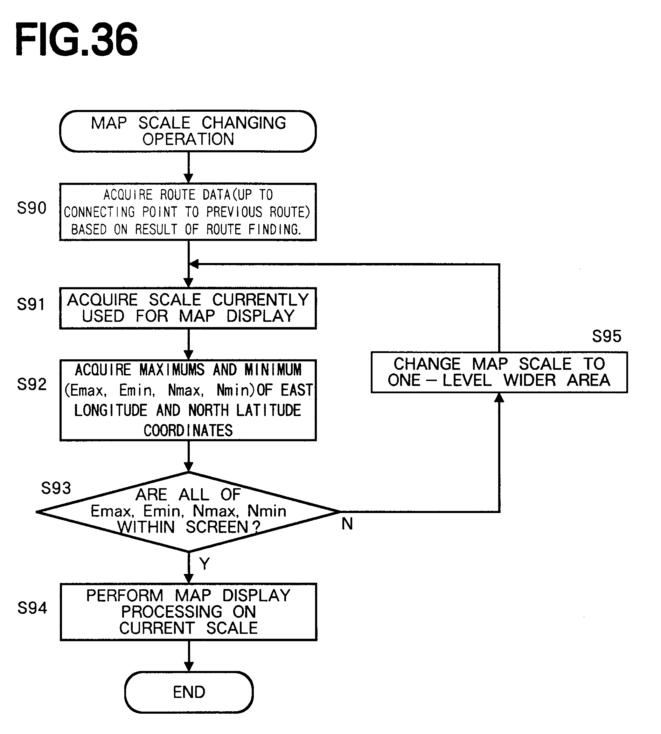

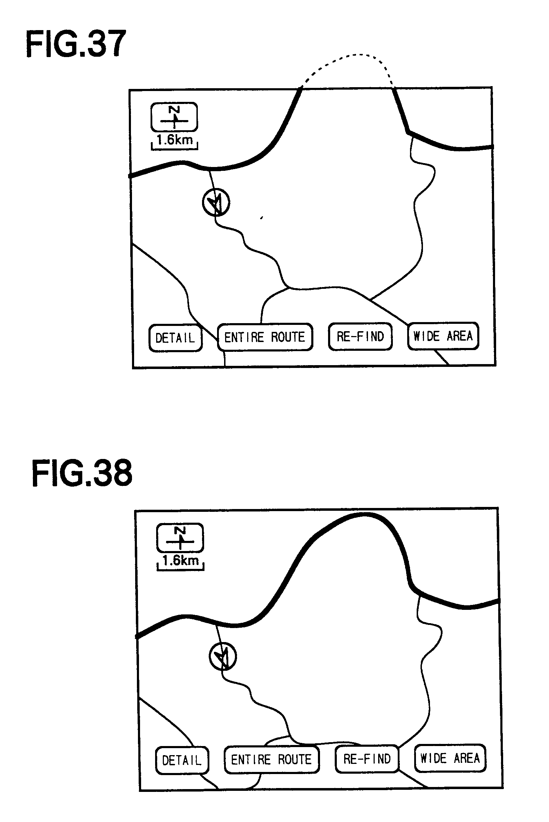

Still another embodiment of the map scale changing operation is illustrated in Fig. 36. This embodiment determines whether the node coordinates on a re-found route are within the map being displayed and, if not, gradually changes the map scale, thus displaying a most-detailed-possible map on an optimal map scale such that the coordinates of all the four points are within the map. First the system acquires the route data (about a route up to the connecting point to the previous route) based on the result of route finding (S90), and acquires the map scale currently used for display (S91), and acquires the maximum and minimum values of the east longitude and north latitude coordinates (Emax, Emin, Nmax, Nmin) (S92). The system then determines whether all of Emax, Emin, Nmax and Nmin are within the display screen based on the currently used map scale (S93) . Following the affirmative determination, the system executes the map display processing on the current scale (S94). If the negative determination is made, the system changes the map scale to a one-level wider map area, and repeats the processing in steps S91-S93. By repeating this processing until all Emax, Emin, Nmax and Nmin come within a display screen, the system can display a detailed map on an appropriate scale that covers the coordinates of all the four points. If a map scale is determined solely on the re-found route, the previous route may become partially out of the screen as shown in Fig. 37. Therefore, by considering the route between the two connecting points of the re-found route to the previous route in determining a map scale, the system can determine a screen that covers both the re-found route and the previous route as shown in Fig. 38.

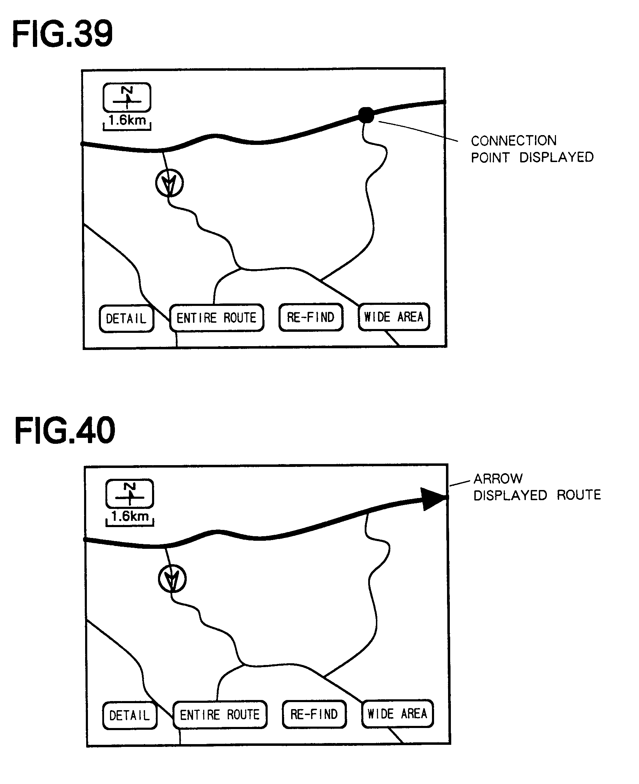

Other embodiments of the present invention may employ any of the following constructions or any combination thereof.
(1) The system provides an additional piece of guidance information in a map as shown in Fig. 39 where the connecting point of a re-found route (not shown) to the previous route is clearly shown, or as shown in Fig. 40 where an arrow indicating the direction to the destination is displayed on the route in a currently displayed map
(2) As other examples of the additional display of guide information, the system displays a re-found route by a dotted line (without performing the voice or other forms of route guidance), or displays an arrow on the re-found route as a simplified form of guidance as shown in Figs. 23 and 24.
(3) The system produces an alarm sound to call attention when automatically changing the map scale.
(4) Although the system switches a current position-centered display to a map-fixed display as in Figs. 26 and 27, the system may change the map scale while maintaining the current position-centered display mode.
(5) After executing route re-finding following detection of an off-route deviation, the system may display the re-found route as a reference route (as shown by the dotted lines in Figs. 23 and 24) before a driver presses the re-find switch. However, the system maintains the display of the previous route and does not perform route guidance based on the route indicated by the dotted line.

Next described will be embodiments of the vehicular navigation apparatus of the invention related to the display of landmark symbols in maps or intersection pictures.

In route guidance by vehicular navigation apparatuses, it is possible to switch from a wide area map to a detailed map around a current position when a user desires detailed information about the area around the current position during guidance based on the route displayed in maps, or to display an enlarged picture of a guidance intersection when the vehicle reaches a predetermined distance before that guidance intersection. With such detailed or enlarged pictures displayed, the user can obtain detailed information. While driving straight, drivers check some guide objects such as road signs, facilities or other landmarks. Conventional vehicular navigation apparatuses display all the symbols (landmark symbols) corresponding to guide objects, that is, not only the symbols corresponding to guide objects that face a route displayed in a map but also other symbols pre-stored for display in the map. In addition, for right or left turns at intersections, vehicular navigation apparatuses provide guidance about an intersection by graphic display or voice when the vehicle reaches a predetermined distance before the intersection.

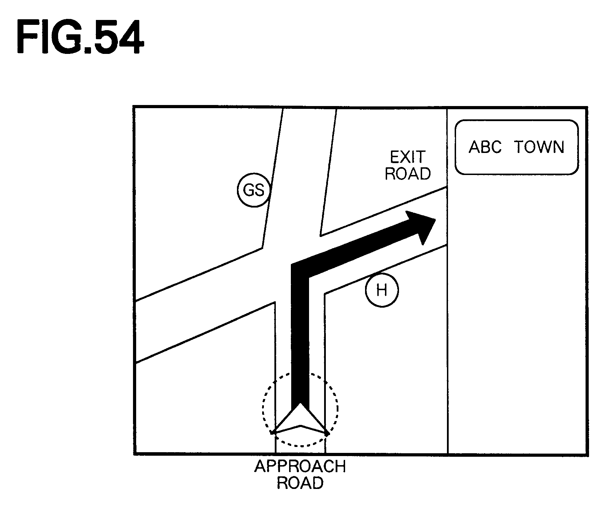

A conventional vehicular navigation apparatus displays an enlarged picture of a predetermined intersection on a guiding route (guidance intersection) as shown in Fig. 54, when approaching the intersection. The apparatus displays a current position symbol 107 at a predetermined distance before the intersection 105, and an arrow line 108 extending through an approach road 109 and a exit road 110 to indicate the travel route of the vehicle. This enlarge picture also shows landmark symbols 106 serving as guides for the intersection, for example, a hotel symbol (H) or a gas station symbol (GS). Japanese patent application laying-open No. HEI-3-150700, as for example, proposes an apparatus that displays a landmark symbol serving as a guide in a picture of a guidance intersection located on a guide route and displays the landmark symbol in an emphasized manner.

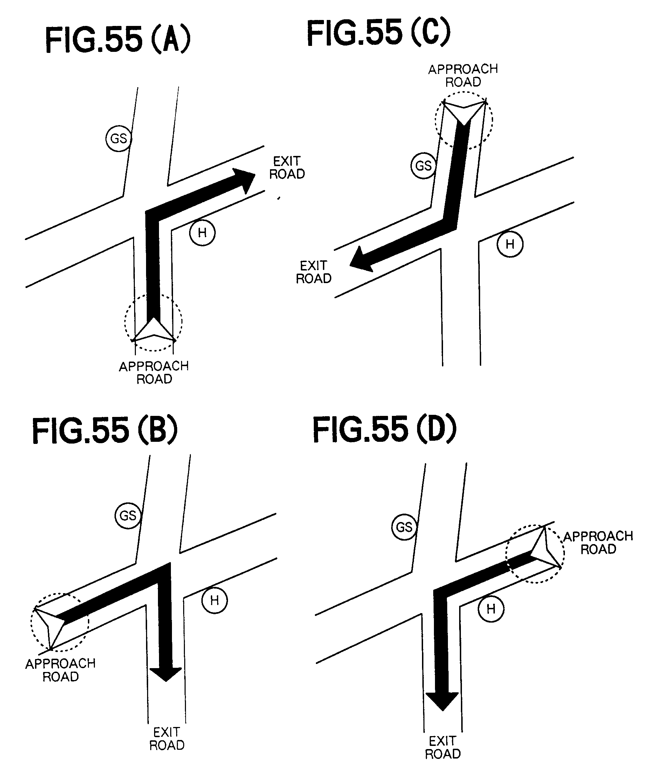

However, for the display of landmarks in maps, the conventional apparatus displays all the landmark symbols prepared corresponding to a map being displayed, including a landmark located apart from the guide route or a landmark that faces the route but is not needed for the route guidance. Furthermore, for the display of landmarks in intersection pictures, the apparatus displays the landmarks predetermined regardless of the direction of approaching the intersection. In some cases, a landmark being indicated in an intersection picture cannot be actually seen depending on the direction of approaching the intersection, thus failing to provide an appropriate display for recognition of the intersection. For example, in a case presented in Fig. 55A, a driver on the approach road cannot see the hotel corresponding to the hotel symbol (H) whereas the gas station can be recognized. In a case presented in Fig. 55B, the gas station is not recognizable from the approach road while the hotel is recognizable. In a case presented in Fig. 55C, both the hotel and the gas station are recognizable from the approach road. In a case presented in Fig. 55D, the gas station is not recognizable from the approach road while the hotel is recognizable.

Thus, the landmark symbols displayed in an intersection picture include ones that are unnecessary or, if not unnecessary, not very useful to recognize the intersection from the road through which a vehicle is approaching the intersection. This problem arises in connection with exit roads as well as approach roads.

Further embodiments of the invention will be described with the drawings.

The prerequisite construction of the invention is made up of means for accomplishing the functions for route guidance to a destination along a pre-established route. The function accomplishing means comprises destination setting means, route finding means, and outputting means. The destination setting means is constituted by: the CPU 40 for executing the programs stored in the first ROM 41 in relation to the destination setting operation; the touch switch panel 11 and the display 12 of the input-output device 1 for inputting a destination and outputting map display and the like; the image processor 45 for display processing such as map display; and input-output processing means formed of the interface 47 for inputting a destination input signal from the touch switch panel 11 into the central processing device 4. The route finding means has a function to search for a route for guidance based on the departure point (vehicle current position) and the destination that are pre-set. The route finding means is constituted by the CPU 40 for executing the programs stored in the first ROM 41 in relation to the route fining operation. The outputting means has a function to output guidance based on a found route, and is constituted by the CPU 40 for executing the programs stored in the first ROM 41 in relation to the display-voice processing, the image processor 45, the voice processor 46, the display 12, the speaker 14 and the like.

The function to picture a landmark in an intersection picture, that is, a feature of the invention, is accomplished by the following construction. Storage means stores road data, intersection data and all the data necessary for navigation and is constituted by the information storage device 3. Route storing means stores a pre-set route, and is constituted by the memory 42 provided in the central processing device. Current position detecting means functions to detect a current position of a vehicle in which the navigation apparatus is installed, and is constituted by the current position detecting device 2. Intersection picturing means functions to prepare a guidance intersection picture based on the stored route, road data and intersection data, and is constituted by the image processor 45, the image memory 44 and the CPU 40 for executing the programs stored in the first ROM 41 in relation to the intersection picturing operation. Display means functions to display the guidance intersection picture that has been subjected to picture processing, and is constituted by the display 12. Landmark display determining means functions to select a landmark to be displayed in the guidance intersection picture on the basis of the detected vehicle current position and the acquired route data, and is constituted by the CPU 40 for executing the programs stored in the first ROM 41 in relation to the landmark display determining operation.

The function to picture a landmark in a map including an intersection picture is accomplished by the following construction. Storage means stores map data that includes intersection data and road data and all the data necessary for navigation, and is constituted by the information storage device 3. Route storing means stores a pre-set route, and is constituted by the memory 42 provided in the central processing device. Current position detecting means functions to detect a current position of a vehicle in which the navigation apparatus is installed, and is constituted by the current position detecting device 2. Map picturing means functions to picture a map based on the stored route, road data and map data, and is constituted by the image processor 45, the image memory 44 and the CPU 40 for executing the programs stored in the first ROM 41 in relation to the map picturing operation. Display means functions to display the map that has been subjected to picture processing, and is constituted by the display 12. Landmark display determining means functions to select a landmark to be displayed in the map on the basis of the detected vehicle current position and the acquired route data, and is constituted by the CPU 40 for executing the programs stored in the first ROM 41 in relation to the landmark display determining operation.

This system determines a current position by calculating an estimated position based on GPS data and signals from various sensors for current position detection, and determining a position on a road in accordance with the correlation among the estimated position, the roads on a map and the GPS data. The system has a function to check the current position with the route to the destination and thereby determine whether the vehicle position on the currently traveling lane is approaching a predetermined guidance point. By this function, the system determines the timing of an automatic voice output or display output of intersection information, such as the name of a passed intersection along the guiding route, at a predetermined distance before the intersection or after it is determined that the intersection has been passed. Based on this timing determination, the system instructs the image processor and the voice processor to prepare pieces of guidance. In addition, upon input of a request signal, the system instructs the voice processor to prepare a voice guidance regarding the current position. The voice guidance of this system is prepared by synthesis of voice data (phrases, sentences, sounds and the like) retrieved from the information storage device 3. The synthesized voice guidance data are converted into analog signals and then outputted from the voice output section.

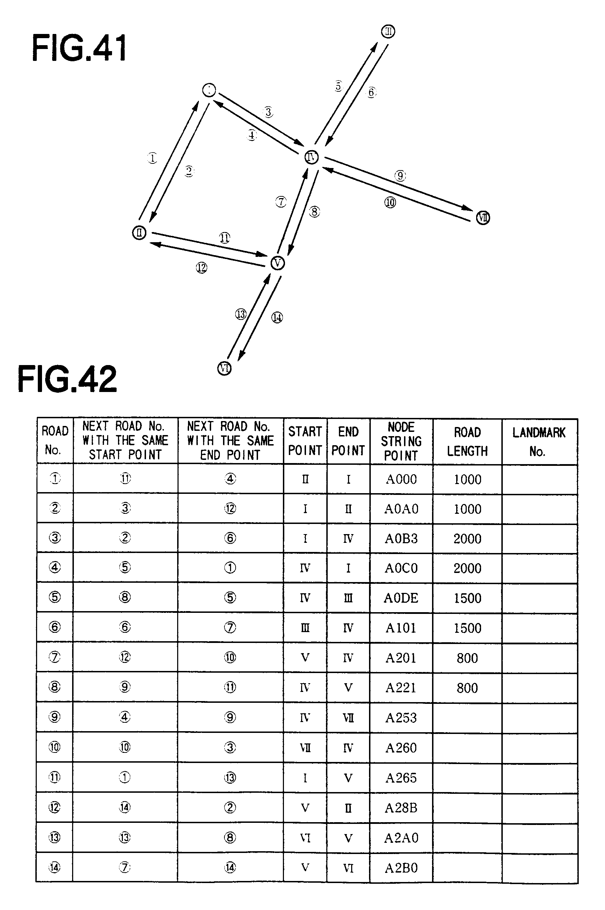

Next described will be data structure in connection with the display of landmarks. The roads connecting to one another at intersections, converging points and diverging points (hereinafter, referred to as 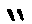 intersections and the like*"*) are assigned with numbers. The node string data based on these road numbers are used to define a guiding route. Fig. 41 shows a node string road network where the roads directed to intersections and like are assigned with numbers. In a case where the roads start and end at intersections, a road (1) starts at an intersection II and ends at an intersection I; a road (2) starts at the intersection II, that is, the start point of the road (1); and a road (3) starts at the intersection I, that is, the end point of the road (1). In this manner, the individual intersections and the roads connecting therebetween can be defined as shown in Fig. 41. The data of the node string road network shown in Fig. 41 is shown in Fig. 42. In the example shown in Fig. 42, the road data are provided with landmark data, and each road is defined by its road number, the next road number with the same start point, the next road number with the same end point, the start point, the end point, the node string pointer, the road length, and a landmark No.

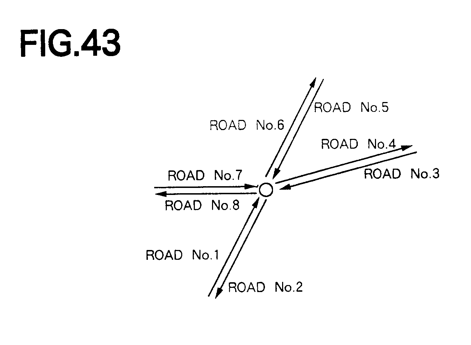

Next described will be the selection of landmarks with respect to individual roads. According to a first embodiment of the landmark display, a landmark is selected from the landmarks that have been provided, and the selected landmark is displayed in an intersection picture or a map that includes an intersection picture. It is first described how to display landmarks at an intersection. When a vehicle is to turn right or left at an intersection, the system selects and displays only the landmark symbols corresponding to the guide objects around the intersection that are needed for the right or left turn. For example, in a case shown in Fig. 43, if the approach road is a road (1), the system selects the landmarks located on the road (1) and the landmarks located on a road (6), for which no guidance is needed in connection with the intersection currently in question. Alternatively, the landmarks located on the roads (1), (2), (4), (5), (6) and (7) are selected.

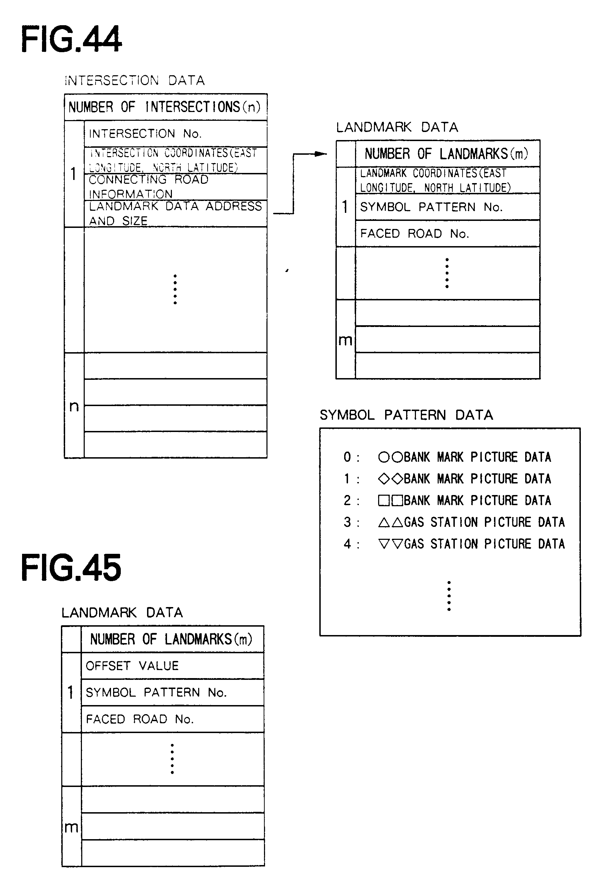

The following description is made in connection with a case where the intersection data is stored with landmark data. The number intersection data stored is equal to the number of actual intersections as shown in Fig. 44. Each intersection is defined by the intersection number assigned to the intersection, the intersection coordinate (coordinates of east longitude and north latitude), the information about the roads connecting to the intersection, and the storage information of landmarks (landmark data addresses and sizes). The number of landmark data stored for each intersection is equal to the number of landmarks to be displayed around the intersection. Each landmark is defined by it landmark coordinate (east longitude and north latitude), the landmark symbol pattern No. and the No. of the road that the landmark faces. For a landmark located in an intersection corner, the data of the two roads is stored. The landmark symbol pattern data numbers correspond to the landmark symbols to be pictured. In the example shown in Fig. 44, number 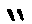 0*"* is assigned to ○○ Bank symbol picturing data, number 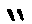 1*"* is assigned to ◇◇ Bank symbol picturing data, and so on.

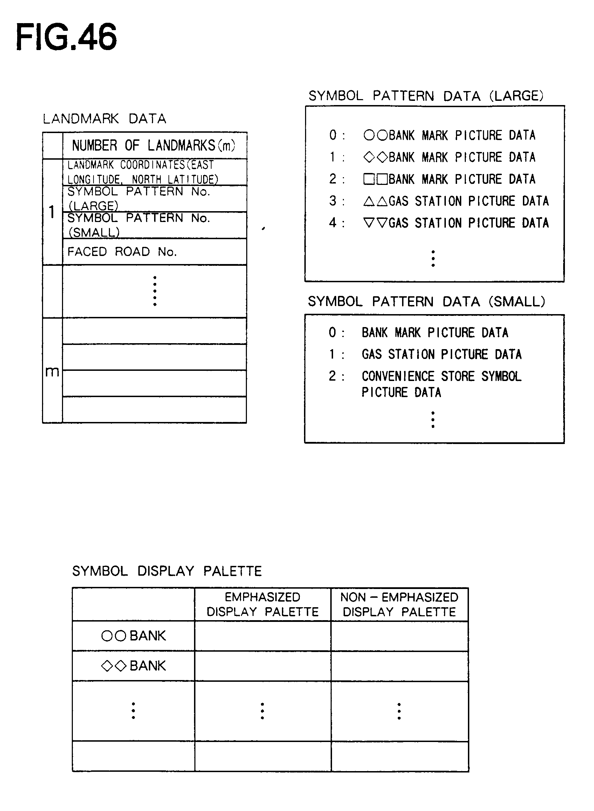

For display of landmarks in maps that include intersection pictures, the road data are provided with the data of landmark to be displayed corresponding to the road data as shown in Fig. 42. More specifically, when the intersection data are provided with landmark data, the landmark data are defined by the coordinates of the display positions of the landmarks in maps and the roads that the landmarks face as shown in Fig. 46, which will be described later.

The landmark symbols are thus stored corresponding to intersection data or map data that include intersection data.

Although the landmark coordinates are based on the east longitude and north latitude according to the aforementioned embodiment, the landmark positions may be provided as offset values determined using the corresponding intersection coordinates as reference points (vector values with the origins set at the intersection coordinates), thus facilitating the control of picturing landmarks in enlarged intersection pictures in an orientation where the intersection approaching direction is directed upward.

The data structures according to other embodiments of the landmark display will be described. According to a second embodiment, selected landmark symbols are displayed in an emphasized manner in intersection pictures or maps that include intersection pictures. According to a third embodiment, the landmark symbols are provided with at least two display manners, and landmarks selected from the thus-stored landmark symbols are displayed in intersection pictures or maps that include intersection pictures.

The data structures of landmarks to be displayed in maps is characterized by the display positions and properties of individual landmarks, and the Nos. of roads faced by the landmarks, for all the landmarks to be displayed in maps used for route guidance as shown in Fig. 46. The 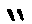 faced road Nos.*"* of the landmark data become unnecessary if the landmark data are stored together with road data as shown in Fig. 42. In such a case, the landmark data are assigned to the corresponding road data.

Each landmark data is defined by the coordinates (east longitude and north latitude) and properties of the landmark, and No. of the road faced by the landmark. The landmark properties are defined by the landmark symbol pattern Nos. and the symbol display palettes according to the second embodiment. According to the third embodiment, the landmark properties are defined by the landmark symbol pattern Nos. (large) and the landmark symbol pattern Nos. (small). Further, the second and third embodiments may be combined.

The landmark symbol pattern data (large) are provided as the data about the characteristic marks of the landmarks, for example, the service marks such as the service mark of ○○ Bank or the service mark of △△ gas station, so that the displayed landmark symbols can be easily identified with their commercial or organization names. The landmark symbol patterns (small) are prepared for the symbols widely used to indicate such landmarks or the landmark symbols pre-stored in this system, for example, a bank symbol or a gas station symbol, so that the displayed landmark symbols can be easily identified with their services. Thus the data of each landmark includes two display patterns, so that the large pattern will be selected for a landmark to be displayed in the emphasized manner and the small patter will be selected for a landmark that does not need the emphasized display.

The landmark symbol display palette is defined by the emphasized display palettes and non-emphasized display palettes corresponding to the individual commercial or organization names. Thus the landmark symbol display palette comprises palettes (combinations of R, G and B) provided separately for the emphasized display and the non-emphasized display so as to provide an increased brightness or a lighter color tone for the emphasized display.

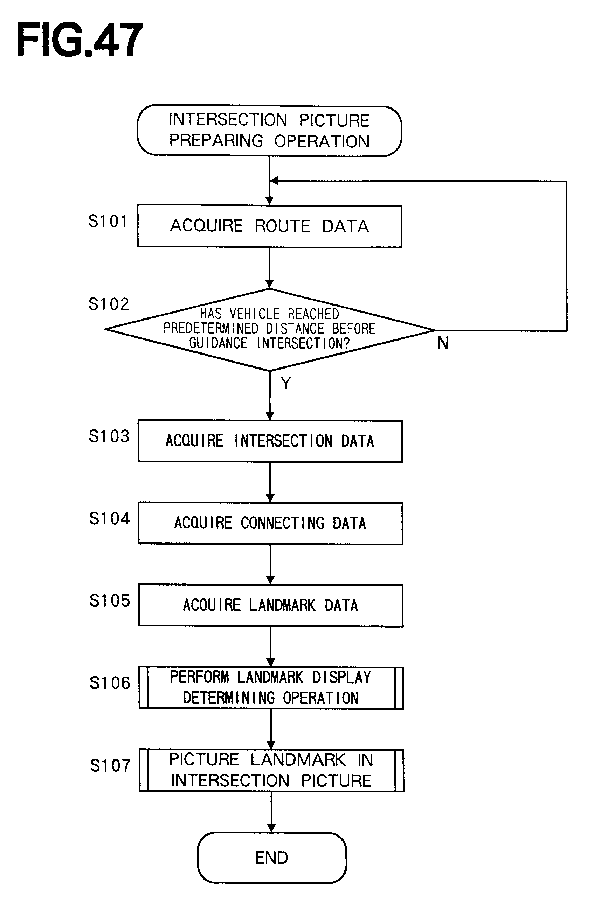

The picturing operation for the landmark display will be described. Fig. 47 shows the flow of the intersection picture preparing operation. The navigation apparatus acquires route data (S101), and determines whether the vehicle has reached a predetermined distance, for example, 300 m, before the guidance intersection (S102). If it has not reached the predetermined distance before the intersection, the apparatus acquires route data again. If the vehicle has reached the predetermined distance before the intersection, the apparatus acquires the data about the intersection (S103), and acquires the data about the connecting roads (S104), and acquires the landmark data (S105), and performs the landmark display determining operation to select the landmarks to be displayed (S106). Then the apparatus pictures and displays the selected landmarks in the intersection picture (S107). The connecting road data acquired in step S104 may be either the data about only the roads connecting to the intersection acquired in step S103 or the data about all the roads located in a predetermined displayed area. In the processing in steps S105-S107, the apparatus determines the pattern data, as shown in Fig. 44 or 46, for the landmark symbols that are pre-stored in the form of image data, and then acquires the image data, and pictures the landmark symbols at the corresponding positional coordinates.

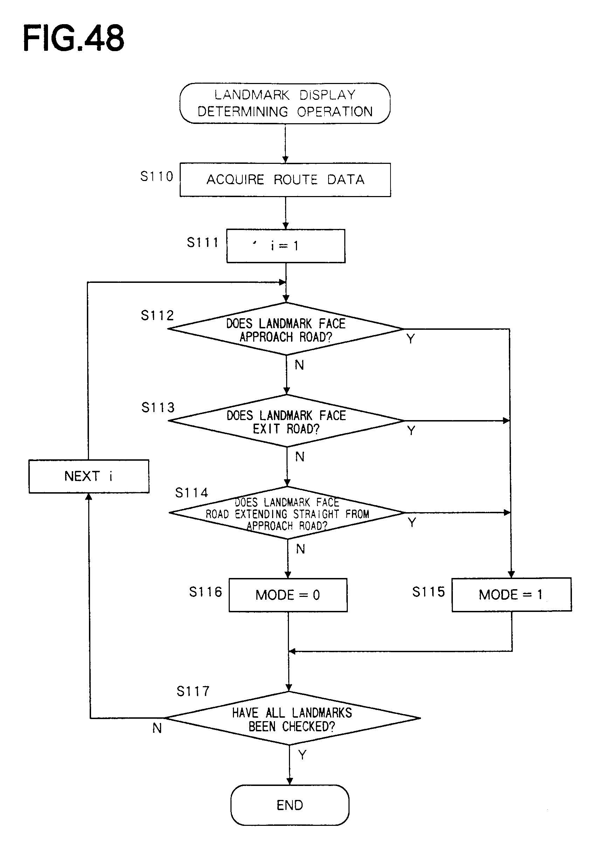

The landmark display determining operation in step S106 will next be described. Fig. 48 illustrates the landmark display determining operation for the landmarks that face the approach road, the exit road, or the road extending straight from the approach road. In this example operation, the apparatus determines whether to display a landmark, separately for each of the landmarks retrieved in connection with the intersection for guidance. In the flowchart of Fig. 48, MODE=1 indicates that the landmark is to be displayed, and MODE=0 indicates that the landmark is not to be displayed.

First, the apparatus acquires route data (S110), and set i=1 (S111) to perform the display determination with respect to each of the retrieved landmarks. Then the apparatus determines whether a landmark faces the approach road (S112). If the landmark does not face the approach road, the apparatus determines whether the landmark faces the exit road (S113). If the landmark does not face either the approach road or the exit road, the apparatus determines whether the landmark faces the road extending straight from the approach road (S114). If it is determined that the landmark does faces any of the roads in step S112, S113 or S114, the apparatus displays the landmark on the corresponding road (set MODE=1) (S115). If the landmark does not face any of the roads, that is, the approach road, the exit road and the road extending straight from the approach road, the apparatus does not display the landmark (set MODE=0) (S116). If the apparatus determines that all the retrieved landmarks have been checked (S117), the operation ends.

In the aforementioned operation, the landmarks to be displayed are selected on the basis of the approach road, the exit road and the road extending straight from the approach road. However, selection may be further performed on the basis of whether the landmark is located on the right or left hand side with respect to the travel direction. For example, in the case of Japan, it may be suitable to select the landmarks located on the left hand side or display those landmarks in an emphasized manner. The display of left-side landmarks is advantageous because drivers will easily recognize landmarks on the left hand side whereas right-side landmarks can be difficult to see in a wide city street with a median strip or heavy traffic.

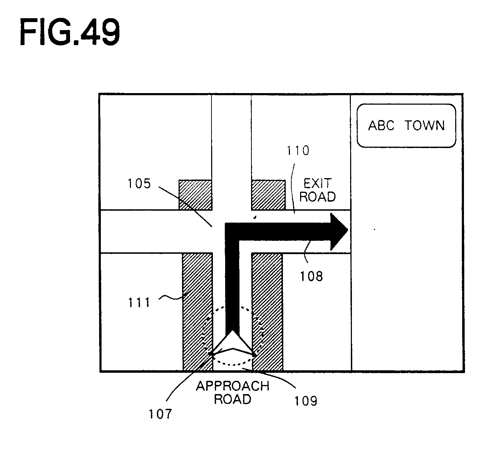

According to another embodiment of the landmark display as shown in Fig. 49, the shadowed areas 111 are determined as display areas, and the apparatus displays only the landmarks that are located within the display areas on the basis of their offset values based on the coordinates (east longitude and north latitude) of the intersection 105. In other words, this embodiment displays only the landmarks that are located along the exit road 110 or in the corners of the guidance intersection, that is, the landmarks recognizable during driving through the approach road 109.

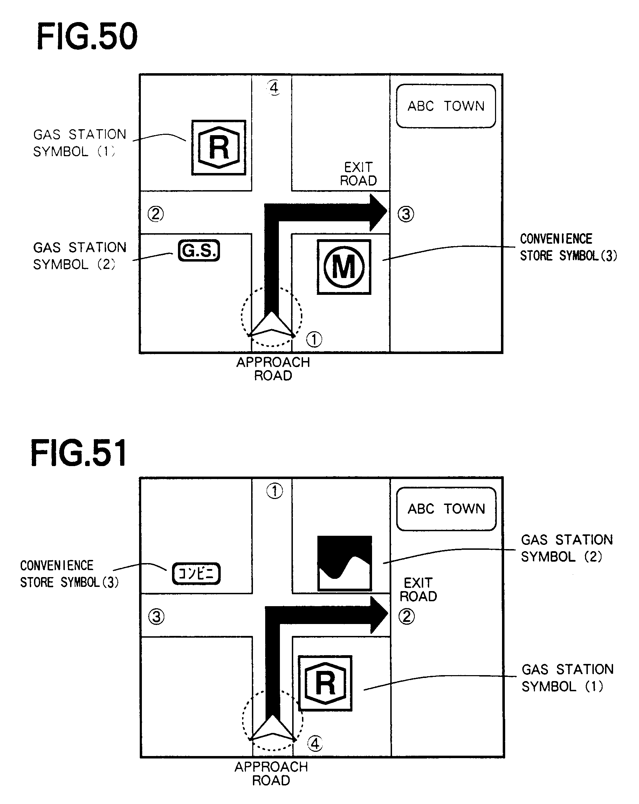

Examples of the landmark display in an intersection picture are shown in Figs. 50 and 51. The two intersection pictures show the same intersection but different approaching directions. The picture of Fig. 50 is for the case where the route goes from road No. 1 to road No. 3. The picture of Fig. 51 is for the case where the route goes from road No. 4 to road No. 2. In these example pictures, the landmarks facing the approach or exit roads are displayed in emphasized manners. By display control using the data structure shown in Fig. 46, the gas station (2) is displayed in the small pattern in Fig. 50 whereas it is displayed in the large pattern in Fig. 51. Conversely, the convenience store symbol (3) is in the large pattern in Fig. 50 whereas it is in the small pattern in Fig. 51.

In addition, several methods of emphasized display may be employed, for example, a method that changes the brightness or the contrast of a symbol without changing the symbol shape, or a method that adds an extra frame to a symbol for emphasis. While a driver is driving in accordance with the instruction by the route guidance, the information on the selected landmarks is sufficient for confirmation. Further, if a driver drives into a road off the guiding route either intentionally or by mistake, the landmark display enables the driver to recognize the road. For example, if while the intersection picture shown in Fig. 50 is being displayed a driver turns into road No. 2, the driver has taken a route that turns left with the emphasized gas station symbol (1) being on the right hand side. In this case, the driver can realize that the driver is on a road off the guiding route because the driver sees on the right hand side the road faced by the gas station (1) while turning, although the driver is supposed to turn right while seeing the gas station (1) on the left hand side and then enter the road faced by the convenience store (3) according to the guidance.

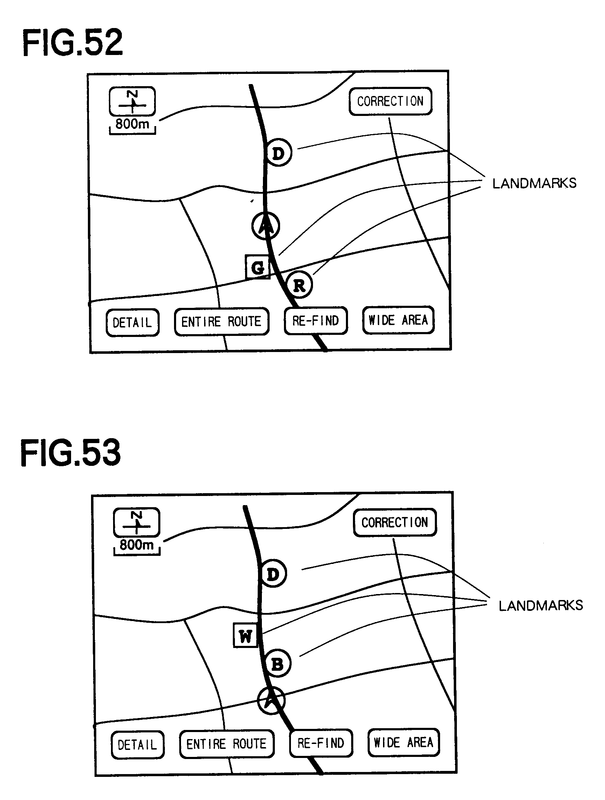

The display of landmarks in a map during route guidance will be described. As for the display of selected landmarks in a map being displayed, the map of Fig. 52 has the display of only the landmark symbols facing the route, whereas the map of Fig. 53 has the display of only the landmark symbols that are located along the route and ahead of the vehicle in the direction of the travel direction. It may also be suitable to display particular symbols in emphasized manners. With this construction, it becomes possible to selectively display information useful for route guidance in a limited display area of the vehicular display device.

In addition, it is permissible to omit some off the landmark symbols from display considering the display density (such as written information density) in a currently displayed map.

According to this embodiment, it is possible to combine the selective display of landmarks and the emphasized display of landmarks. It is also possible to allow a user to select a desired display mode from the selective display, the emphasized display and a display mode where all the predetermined landmarks are displayed.

With the above-described construction according to the embodiment, the information storage means stores landmark data. As for the intersection picturing means, when the vehicle current position detected by the current position detecting means is a predetermined distance before the intersection, the land mark display determining means selects a landmark to be displayed on the basis of the route stored in the route storing means, and the intersection picturing means pictures the selected landmark in the guidance intersection picture, and outputs the picture data to the display means to display the picture. A land mark is selected from the landmarks stored by the storage means and displayed and, optionally, the selected landmark is displayed in an emphasized manner. Thus, it becomes easy for a driver to confirm the landmark displayed in a map or an intersection picture with the corresponding actual landmark. In intersection pictures in particular, the apparatus selectively displays only landmarks visually recognizable by a driver from the approach road and/or the exit road, or displays these selected landmarks in an emphasized manner, thus facilitating positional recognition at intersections.

While the present invention has been described with reference to what are presently considered to be preferred embodiments thereof, it is to be understood that the invention is not limited to the disclosed embodiments. To the contrary, the invention is intended to cover various modifications and equivalent arrangements included within the spirit and scope of the appended claims.

## Claims

1. A vehicular navigation apparatus for route guidance to a destination based on a route found by search, comprising:
storage means in which information needed for navigation and map information are stored;
current position detecting means for detecting a current position of a vehicle and a traveling direction of the vehicle;
route finding means for finding a guiding route from a current position to a destination based on the information stored in the storage means, and for, when the vehicle has deviated from the route, re-finding a guiding route;
route storing means for storing the route found by the route finding means and the route re-found by the route finding means when the vehicle has deviated from the route;
off-route deviation detecting means for detecting a deviation of the vehicle from the guiding route on the basis of detection by the current position detecting means and guiding route information stored in the route storing means;
outputting means for outputting guidance information based on the guiding route;
central processing means for outputting guidance information to the outputting means on the basis of the guiding route found by the route finding means and the current position detected by the current position detecting means; and
route output instructing means for instructing to output the re-found route stored in the route storing means,
upon an instruction given, when the vehicle has deviated from the guiding route, by the route output instructing means to start route guidance based on a re-found route, the central processing means outputting the re-found route stored in the route storing means in order to perform route guidance based on the re-found route.

2. A vehicular navigation apparatus according to claim 1, wherein the route output instructing means comprises means for selecting an auto-reroute-on mode for immediately starting route guidance based on the result of route re-finding, and an auto-reroute-off mode for storing the result of route re-finding and, upon a driver's instruction to output a re-found route, displaying the stored result of route re-finding, and starting route guidance.

3. A vehicular navigation apparatus for route guidance to a destination based on a route found by search, comprising:
storage means in which information needed for navigation and map information are stored;
current position detecting means for detecting a current position of a vehicle and a traveling direction of the vehicle;
route finding means for finding a guiding route from a current position to a destination based on the information stored in the storage means, and for, when the vehicle has deviated from the route, re-finding a guiding route;
route storing means for storing the route found by the route finding means and the route re-found by the route finding means when the vehicle has deviated from the route;
off-route deviation detecting means for detecting a deviation of the vehicle from the guiding route on the basis of detection by the current position detecting means and guiding route information stored in the route storing means;
map scale determining means for, when the route deviation detecting means detects an off-route deviation, determining a map scale such that it becomes possible to display in a map a route re-found on the basis of current position information detected by the current position detecting means;
route display processing means for performing display processing of the guiding route found by the route finding means and display processing of the route re-found by the route finding means when an off-route deviation is detected, on the basis of the map scale determined by the map scale determining means; and
outputting means for outputting guidance information based on the guiding route processed by the route display processing means.

4. A vehicular navigation apparatus for route guidance to a destination based on a route found by search, comprising:
storage means in which information needed for navigation and map information are stored;
current position detecting means for detecting a current position of a vehicle and a traveling direction of the vehicle;
route finding means for finding a guiding route from a current position to a destination based on the information stored in the storage means, and for, when the vehicle has deviated from the route, re-finding a guiding route;
route storing means for storing the route found by the route finding means and the route re-found by the route finding means when the vehicle has deviated from the route;
off-route deviation detecting means for detecting a deviation of the vehicle from the guiding route on the basis of detection by the current position detecting means and guiding route information stored in the route storing means;
map scale determining means for, when the route deviation detecting means detects an off-route deviation, determining a map scale such that it becomes possible to display in a map a route re-found on the basis of current position information detected by the current position detecting means;
route output instructing means for instructing to output the re-found route stored in the route storing means;
route display processing means for performing display processing of the guiding route found by the route finding means and display processing of the route re-found by the route finding means when an off-route deviation is detected, on the basis of the map scale determined by the map scale determining means; and
outputting means for outputting guidance information based on the guiding route processed by the route display processing means,
upon an instruction from the route output instructing means to start route guidance based on a re-found route, the route display processing means outputting the re-found route stored in the route storing means to the outputting means in order to perform route guidance based on the re-found route.

5. A vehicular navigation apparatus according to claim 3 or 4, wherein the route display processing means has a function to produce a current position-centered display or a fixed-map display, and wherein said route display processing means performs display processing when the re-found route is outputted on the basis of the map scale determined by the map scale determining means.

6. An apparatus according to claim 3, 4, or 5, wherein the route display processing means adds guidance information based on the re-found route to a map that is displayed before the re-found route is outputted on the basis of the map scale determined by the map scale determining means.
that it is possible to distinguish the re-found route from the previous guiding route.

7. A vehicular navigation apparatus according to claim 6, wherein the guidance information displayed in the map is the re-found route additionally displayed in such a display manner that it is possible to distinguish the re-found route from the previous guiding route.

8. A vehicular navigation apparatus according to claim 6 or 7,wherein the guidance information is additionally displayed on the previous guiding route.
